# EUROPÄISCHE PATENTSCHRIFT

(11) **EP 2 105 454 B1**
(45) Veröffentlichungstag und Bekanntmachung des Hinweises auf die Patenterteilung: **12.09.2012**
(21) Anmeldenummer: 08006034.6
(22) Anmeldetag: 28.03.2008
(51) Int. Cl.: C08G 77/28, C08G 77/392, D06M 15/643

(54) **Thioether-funktionalisierte Organopolysiloxane**
Thioether functionalised organopolysiloxanes
Polysiloxanes organiques fonctionnalisés par thioéther

(43) Veröffentlichungstag der Anmeldung: 30.09.2009
(73) Patentinhaber: Schill + Seilacher "Struktol" GmbH, 22113 Hamburg (DE)
(72) Erfinder: Dittrich, Uwe Dr., 01445 Radebeul (DE); Becker, Dörte, 21035 Hamburg (DE)
(74) Vertreter: UEXKÜLL & STOLBERG

(56) Entgegenhaltungen:
- EP-A- 0 407 799
- US-A- 3 532 729
- US-A- 4 985 155
- US-A- 5 079 298

## Beschreibung

Die Erfindung betrifft neue Thioether-funktionalisierte Organopolysiloxane, Verfahren zu deren Herstellung und die Verwendung dieser Organopolysiloxane als Textilweichmacher, zur Behandlung von Fasern, Celluloseprodukten und in kosmetischen Zubereitungen, insbesondere als waschfeste Textilweichmacher.

Organopolysiloxane sowie deren Verwendung als Textilweichmacher sind hinreichend bekannt. Eine zusammenfassende Darstellung über Struktur und Wirkung von Textilweichmachern geben P. Habereder und A. Bereck in Review of Progress in Coloration and Related Topics 2002, 32, 125-137. Klassische Textilweichmacher sind die dem Fachmann bekannten aminofunktionellen Organopolysiloxane, die, wenn sie über reaktive Si-OH oder Si-OR-Gruppen an den Kettenenden verfügen, durch Kettenverlängerung während der Lagerung dem behandelten Textil einen zunehmend weicheren und glatteren Griff, aber auch zunehmend wasserabweisende Eigenschaften verleihen. Die bislang als optimal angesehenen hydrophilen/hydrophoben Weichmacher sind Silikone mit end- oder seitenständiger Aminofunktion, die unter der Voraussetzung eines optimalen Verhältnisses von modifizierter Organoeinheit zu Silikongrundgerüst einen guten Weichgriff erzeugen. Die Anzahl und Verteilung der aminoorganischen Modifikationen am Silikongrundgerüst entscheidet über die Hydrophilie bzw. Hydrophobie und begleitende physikalische Eigenschaften, wie z.B. die Haptik.

US-A-5,079,298 offenbart ein siliziumhaltiges Polymer mit Kammstruktur, das ein Organopolysiloxan als Hauptkette und ein Vinylpolymer als Seitenkette aufweist.

US-A-4,985,155 offenbart Textilbehandlungsmittel in Form einer wässrigen Lösung. Das Mittel wird durch Pfropfcopolymerisation von Organopolysiloxan mit einem Gemisch von Acrylmonomeren hergestellt.

US-A-3,532,729 offenbart die Herstellung von Siloxanen in Emulsion durch Umsetzung von Mercaptoorganosiloxanen mit ungesättigten Verbindungen, beispielsweise Acrylaten.

EP 0 407 799 A2 betrifft ein Bindemittel auf Basis von Latices von Pfropfcopolymeren spezieller Vinylmonomere oder ihrer Gemische auf Mercaptogruppen enthaltende Polyorganosiloxane.

Die US 6,803,103 B2, US 6,632,385 B2 und WO 02/076731 A1 beschreiben die Ausrüstung insbesondere von Vliesen durch die Anwendung von die Oberfläche der Faser modifizierenden Mitteln. Die Mittel umfassen aminomodifizierte Polydimethylsiloxane und bewirken die Beeinflussung von Eigenschaften wie der ästhetischen taktilen Parameter (organoleptisches Fühlen des Textils) und der Drapierbarkeit.

Häufig bestehen die aminomodifizierten Organoeinheiten eines Aminosiloxans nicht nur aus primären, sondern auch aus sekunkären Aminen. Dies und auch ein gewisser Anteil von Verunreinigungen, der aus tertiären Aminen bestehen kann, sorgen dafür, dass die Farbechtheit derartig behandelter Textilien oder Fasern nicht gegeben ist und nach einiger Zeit gravierende Vergilbungen des behandelten Materials auftreten können, wie sich in der Farbechtheitsprüfung nach EN ISO 105 B02 belegen lässt.

Es bestand somit die Aufgabe, diese Nachteile des Standes der Technik zu überwinden. Insbesondere sollten Textilweichmacher bereitgestellt werden, die nicht zu dem beschriebenen Vergilben der ausgerüsteten Textilien führen und eine Einstellung der hydrophilen/hydrophoben Eigenschaften der Textilien erlauben.

Diese Aufgabe wird erfindungsgemäß durch eine Gruppe von speziellen Thioether-funktionalisierten Organopolysiloxanen gelöst, welche den Rest R^{S} aufweisen, der über eine Silizium-Kohlenstoff-Bindung gebunden ist, wobei
- R^{S}: -R¹-S-E-A, -R¹-S-E-A-R² oder -R¹-A-E-S-R² bedeutet, und
- R¹: eine zweiwertige, lineare, verzweigte oder cyclische Kohlenwasserstoffgruppe bedeutet,
- S: ein Schwefelatom bedeutet,
- E: eine zweiwertige, lineare, verzweigte oder cyclische Kohlenwasserstoffgruppe bedeutet,
- A: eine Gruppe mit Elektronenakzeptoreigenschaften bedeutet und
- R²: Wasserstoff oder eine einwertige, lineare, verzweigte oder cyclische Kohlenwasserstoffgruppe bedeutet.

Die erfindungsgemäßen Organopolysiloxane weisen ein Polysiloxan-(Silikon)-Grundgerüst auf, an das ein oder mehrere Reste R^{S} gebunden sind, wobei R^{S} über eine Silizium-Kohlenstoff-Bindung gebunden ist. In den erfindungsgemäßen Organopolysiloxanen ist R^{S} über R¹ gebunden und führt die Thioethereinheit "S" ein. Dabei befindet sich der zweiwertige Rest E erfindungsgemäß zwischen dem Schwefelatom S und der Gruppe mit Elektronenakzeptoreigenschaften A, wobei E in einer besonders bevorzugten Ausführungsform ein oder zwei Kohlenstoffatome zwischen S und A einführt (und darüber hinaus seitenständige Gruppen aufweisen kann).

Ferner betrifft die vorliegende Erfindung ein spezielles Verfahren zur Herstellung des Organopolysiloxans, bei dem die Komponenten (a) Schwefel-funktionalisierte Verbindung, (b)

Reagenz mit aktivierter Doppelbindung und (c) Silikonmonomer miteinander umgesetzt werden. Zudem betrifft die Erfindung auch Organopolysiloxane, die nach dem erfindungsgemäßen Verfahren herstellbar oder hergestellt sind.

Außerdem betrifft die Erfindung Zubereitungen, die mindestens ein erfindungsgemäßes Organopolysiloxan enthalten.

Schließlich betrifft die Erfindung die Verwendung solcher Zubereitungen zur Weichgriffausrüstung und/oder Hydrophobausrüstung von Textilien, als Prozesshilfsmittel zur Herstellung oder zur Beschichtung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege.

Weitere Ausführungsformen der Erfindung ergeben sich aus den abhängigen Ansprüchen.

### Figuren

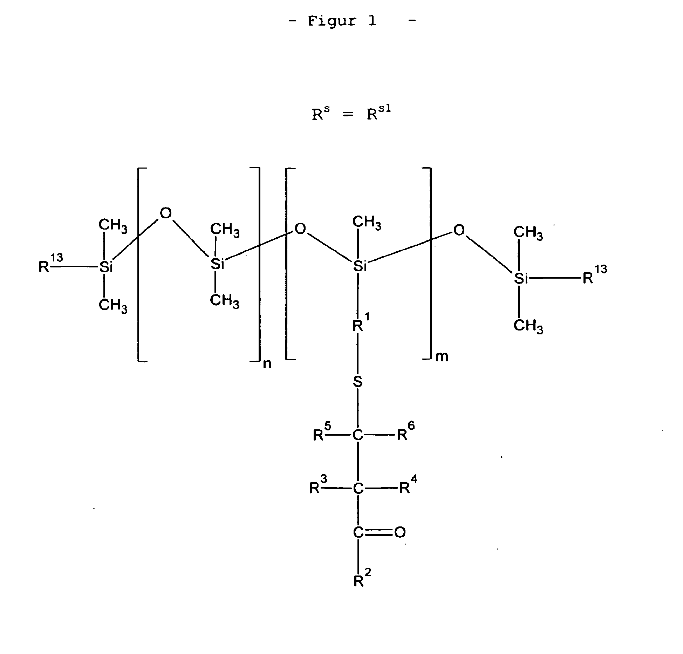

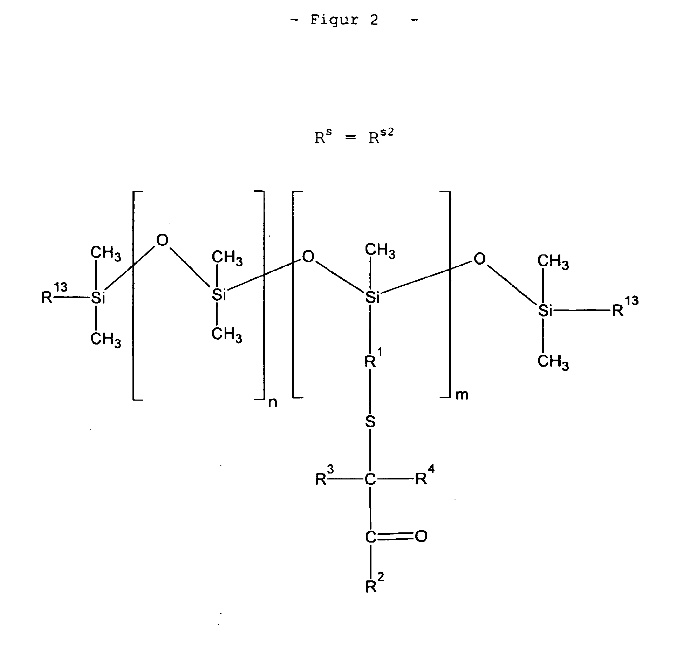

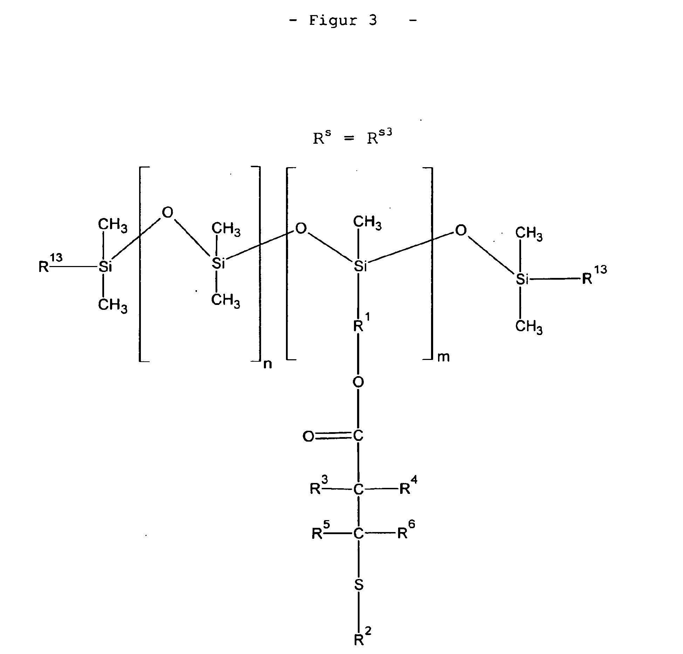

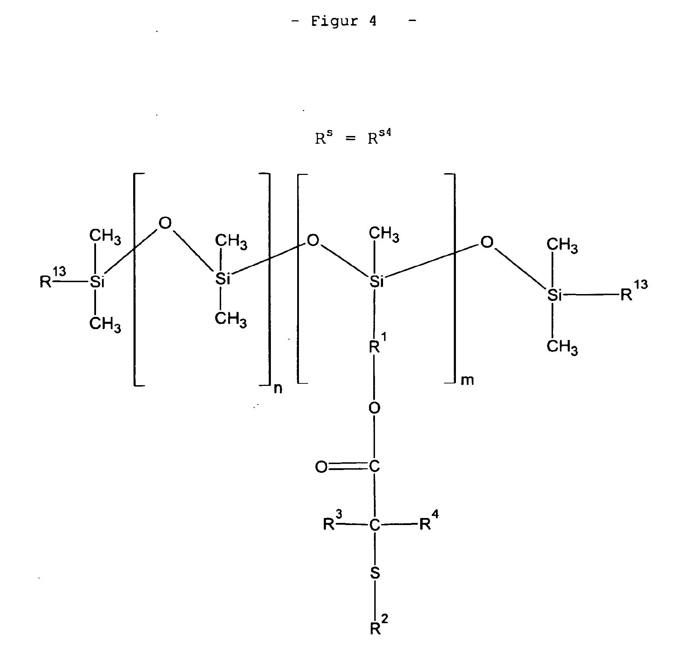

Die Figuren 1 bis 4 zeigen bevorzugte Ausführungsformen erfindungsgemäßer Organopolysiloxane, wobei für die angegebenen Strukturen folgendes gilt:

### Figur 1:

Bevorzugte Werte für n und m:
n = 10 - 500 und m = 1 - 100

### allgemein

- R¹: -Alkyl z.B. - (CH₂) ₃-
- R²: -Alkyl, -Cycloalkyl, -Aryl, -Alkoxy, Hydroxy, -H
- R³ bis: R⁶ -H oder/und -Alkyl
- R¹³: -Alkyl, -Alkoxy, -Hydroxy

### bevorzugt

- R¹: - (CH₂) ₃-
- R²: -Alkoxy
- R³ bis R⁶: -H oder/und -Alkyl
- R¹³: -CH₃, -OH, -OCH₃, -OCH₂CH₃.

### Figur 2:

Bevorzugte Werte für n und m:
n = 10 - 500 und m = 1 - 100

### allgemein

- R¹ -Alkyl: z.B. - (CH₂) ₃-
- R²: -Alkyl, -Cycloalkyl, -Aryl, -H
- R³ bis R⁶: -H oder/und -Alkyl
- R¹³: -Alkyl, -Alkoxy, -Hydroxy

### bevorzugt

- R¹: -(CH₂) ₃-
- R²: -Alkyl
- R³ bis R⁶: -H oder/und -Alkyl
- R¹³: -CH₃, -OH, -OCH₃, -OCH₂CH₃.

### Figur 3:

Bevorzugte Werte für n und m:
n = 10 - 500 und m = 1 - 100

### allgemein

- R¹: -Alkyl z.B. - (CH₂) ₃-
- R²: -Alkyl, -Cycloalkyl, -Aryl, -H
- R³ bis R⁶: -H oder/und -Alkyl
- R¹³: -Alkyl, -Alkoxy, -Hydroxy

### bevorzugt

- R¹: - (CH₂) ₃-
- R²: -Alkyl
- R³ bis R⁶: -H oder/und -Alkyl
- R¹³: -CH₃, -OH, -OCH₃, -OCH₂CH₃.

### Figure 4:

Bevorzugte Werte für n und m:
n = 10 - 500 und m = 1 - 100

### allgemein

- R¹: -Alkyl z.B. -(CH₂) ₃-
- R²: -Alkyl, -Cycloalkyl, -Aryl, -H
- R³, R⁴: -H oder/und -Alkyl
- R¹³: -Alkyl, -Alkoxy, -Hydroxy

### bevorzugt

- R¹: -(CH₂)₃-
- R²: -Alkyl
- R³, R⁴: -H oder/und -Alkyl
- R¹³: -CH₃, -OH, -OCH₃, -OCH₂CH₃ .

### 1. Thioether-funktionalisiertes Organopolysiloxan

Erfindungsgemäße Thioether-funktionalisiertes Organopolysiloxane weisen den Rest R^{S} auf, der über eine Silizium-Kohlenstoff-Bindung gebunden ist, wobei

| | | |
|---|---|---|
| R^{S} | | |
| | -R¹-S-E-A-R² | (a) oder |
| | -R¹-A-E-S-R² | (b) bedeutet, und |
| R¹ | | eine zweiwertige, lineare, verzweigte oder cy- |
| | | clische Kohlenwasserstoffgruppe bedeutet, |
| S | | ein Schwefelatom bedeutet, |
| E | | eine zweiwertige, lineare, verzweigte oder cy- |
| | | clische Kohlenwasserstoffgruppe bedeutet, |
| A | | eine Gruppe mit Elektronenakzeptoreigenschaften |
| | | bedeutet und |
| R² | | Wasserstoff oder eine einwertige, lineare, ver- |
| | | zweigte oder cyclische Kohlenwasserstoffgruppe |
| | | bedeutet. |

Die in dem Thioether-funktionalisierten Organopolysiloxan vorliegenden Kohlenwasserstoffgruppen können gegebenenfalls von Stickstoff-, Sauerstoff- oder Schwefelatomen unterbrochene Kohlenwasserstoffreste sein, die gegebenenfalls ein oder mehrere Substituenten tragen.

In einer besonders bevorzugten Ausführungsform bedeutet E den zweiwertigen Rest -CR³R⁴- oder den zweiwertigen Rest -CR³R⁴-CR⁵R⁶-, wobei R³, R⁴, R⁵, R⁶ Wasserstoff oder eine einwertige, lineare, verzweigte oder cyclische Kohlenwasserstoffgruppe bedeuten und gleich oder verschieden sein können.

Beispielhafte Gruppen A sind die Carbonylgruppe (CO), die Carboxylgruppe (COO) , die Sulfonsäuregruppe (SO₃) oder ein Sauerstoffatom (O). In allen Ausführungsformen der Erfindung ist es bevorzugt, dass A die Carboxylgruppe (COO) oder die Carbonylgruppe (CO) und insbesondere die Carboxylgruppe (COO) darstellt.

R¹ ist eine zweiwertige, lineare, verzweigte oder cyclische Kohlenwasserstoffgruppe und bindet R^{S} über eine Si-C-Bindung an ein Siliziumatom des Silikongrundgerüsts. R¹ hat also mindestens ein (1) Kohlenstoffatom in der Kette zwischen dem Si-Atom des Grundgerüsts und den Gruppen S, A, E und R² . Der Rest R¹ kann eine Hydroxylgruppe und in der Kohlenstoffkette Sauerstoff- Schwefel- oder Stickstoffatome aufweisen. Beispiele für R¹ sind -CH₂CH₂-, -CH₂CH₂CH₂-, -CH₂CH(CH₃) -, -CH₂CH₂CH₂CH₂-, -CH₂CH(CH₂CH₃) -, -CH₂CH₂OCH₂CH₂-, -CH₂CH₂NHCH₂CH₂-, -CH₂CH₂CH₂OCH₂CH₂CH₂-, -CH₂CH₂OCH₂CH₂OCH₂CH₂- und -CH₂CH (OH) CH₂-.

Die Gruppe R¹ ist vorzugsweise eine 1,ω-C₁- s C₁₀-Alkylengruppe, besonders bevorzugt eine 1,ω-C₁- bis C₄-Alkylengruppe, insbesondere eine 1,3-Propylengruppe.

Bevorzugte Gruppen R^{S} haben die Bedeutung R^{s1,} R^{s2}_{,} R^{s3} oder R^{s4}_{:}

-R¹-S-CR⁵R⁶-CR³R⁴-COOR² (R^{s1}) ,

-R¹-S-CR³R⁴-COOR² (R^{s2}) ,

-R¹-O-CO-CR³R⁴-CR⁵R⁶-SR² (R^{S3})

oder

-R¹-O-CO-CR³R⁴-SR² (R^{S4}) ,

d.h. E bedeutet den zweiwertigen Rest -CR³R⁴- oder den zweiwertigen Rest -CR³R⁴-CR⁵R⁶- Die Bedeutungen R^{s1} und R^{s2} stellen besonders bevorzugte Ausführungsformen der Erfindung dar.

Erfindungsgemäß ist R² zwingend vorhanden, d.h. R^{s} hat die oben angegebene Bedeutung (a) oder (b). Beispiele für R² sind Wasserstoff oder eine lineare oder verzweigte C₁- bis C₂₀-Alkylgruppe, eine C₁- bis C₂₀-Cycloalkylgruppe oder C₁- bis C₂₀-Arylgruppe, vorzugsweise eine verzweigte C₁- bis C₁₂-Alkylgruppe, insbesondere eine Methylgruppe, eine Ethylgruppe, eine 2-Ethylhexylgruppe, eine Stearylgruppe oder eine Isodecylgruppe. In weiteren Ausführungsformen, die nachfolgend diskutiert sind, weist R² weitere S-aktivierende Funktionen auf, wie beispielsweise ein oder mehrere Gruppen E und/oder A, beispielsweise wenn R^{s} gleich R^{s3} oder R^{s4} ist.

Die Gruppen R³ bis R⁶ können gleich oder verschieden sein und beispielsweise ein Wasserstoffatom, ein geradkettiger, verzweigter oder cyclischer Alkylrest mit 1 bis 30 Kohlenstoffatomen, wie der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl-, Octadecyl-, C₂₄H₄₉-, Cyclopentyl-, Cyclohexyl-, Cycloheptyl-, Methylcyclohexyl- und Cyclooctylrest, ein geradkettiger, verzweigter oder cyclischer Alkenylrest mit 2 bis 30 Kohlenstoffatomen, wie der Vinyl-, Allyl-, aber auch Propargyl-, But-1-en-4-yl-, But-1-en-3-yl-, Pentenyl-, Hex-1-en-6-yl-, Hex-2-en-6-yl- und Oleylrest, ein Aryl-CH₂-Rest, wie der Benzyl-, o-, m-, p-Methylbenzylrest, aber gegebenenfalls auch ein Arylrest, wie der Phenylrest, o, m, p-Tolyl- und Xylylrest sein. Die Substituenten R³ bis R⁶ können auch Alkyl- oder Alkylenreste, die Hydroxylgruppen aufweisen, wie Hydroxyethyl- oder Hydroxypropylreste, sein. Die Substituenten R³ bis R⁶ können weiterhin Alkylreste, die von Sauerstoffatomen unterbrochen sind, wie -(C₂H₄O)ᵤR', -(C₃H₆O)ᵤR', -(C₂H₄O)u(C₃H₆O)ᵥR' und -(C₄H₈O)ᵤR', wobei u, v eine ganze Zahl von 1 bis 50, vorzugsweise von 1 bis 15, ist und R' ein Wasserstoffatom oder ein Kohlenwasserstoffrest mit 1 bis 8 Kohlenstoffatomen, bevorzugt Wasserstoff, ein Methyl- oder Butylrest ist, und weiterhin Alkylreste, die von Schwefelatomen unterbrochen sind, wie -(C₂H₄S)ᵤR' und -(C₃H₆S)ᵤR', wobei u und R' die oben dafür angegebene Bedeutung haben, sein. Bevorzugt sind die Substituenten R³ bis R⁶ Wasserstoff oder Alkylreste mit 1 bis 8 Kohlenstoffatomen, wie der Methyl-, Ethyl- und Propylrest, Alkenylreste mit 2 bis 8 Kohlenstoffatomen, wie der Allylrest, ein Benzylrest, Bestandteil eines verbrückenden Alkylenrests mit 2 bis 9 Kohlenstoffatomen, wie Ethylen-, Propylen- oder Isophorylenrest, oder ein Hydroxylgruppen aufweisender Alkylrest mit 2 bis 3 Kohlenstoffatomen, wie der Hydroxyethyl- oder Hydroxypropylrest.

Die Reste R³, R⁴, R⁵ und R⁶ stellen vorzugsweise unabhängig voneinander Wasserstoff oder eine lineare C₁- bis C₁₀-Alkylgruppe dar, insbesondere Wasserstoff oder Methyl.

Es wurde bereits erwähnt, dass R^{s} vorzugsweise die Bedeutung R^{s1} oder R^{s2} hat. Dabei hat in einer bevorzugten Ausführungsform R^{s} die Bedeutung R^{s1}

-R¹-S-CR⁵R⁶-CR³R⁴-COOR²

, und
- R⁴, R⁵ und R⁶: bedeuten jeweils Wasserstoff und
- R³: bedeutet Wasserstoff oder Methyl, vorzugsweise Methyl.

### Ebenfalls bevorzugt hat R^{s} die Bedeutung R^{s2}

-R¹-S-CR³R⁴-COOR²

, und
- R⁴: bedeutet Methyl und
- R³: bedeutet Wasserstoff oder Methyl, vorzugsweise Methyl. Darüber hinaus kann R^{s} die Bedeutung R^{s3} haben

-R¹-O-CO-CR³R⁴-CR⁵R⁶-SR²

, und
- R⁴, R⁵ und R⁶: bedeuten jeweils Wasserstoff, und
- R³: bedeutet Wasserstoff oder Methyl, vorzugsweise Methyl.

### Letztendlich kann R^{s} die Bedeutung R^{s4} haben

-R¹-O-CO-CR³R⁴-SR²

, und
- R⁴: bedeutet Methyl, und
- R³: bedeutet Wasserstoff oder Methyl, vorzugsweise Methyl.

Vorzugsweise ist in dem Thioether-funktionalisierten Organopolysiloxan R^{s} als Teil der Struktureinheit I vorhanden

[R⁷ₐ(R⁸O)_{b}R^{s}_{c}SiO_{[4-(a+b+c)/2]}] (I),

wobei
- R⁷, R⁸: lineare, verzweigte oder cyclische organische Reste bedeuten und gleich oder verschieden sein können,
- a: die Werte 0, 1 oder 2 annehmen kann und vorzugsweise 1 ist,
- b: die Werte 0, 1 oder 2 annehmen kann und vorzugsweise 0 ist,
- c: die Werte 1, 2 oder 3 annehmen kann und vorzugsweise 1 ist,
wobei in Struktureinheit I

die Summe (a+b+c) die Werte 2 oder 3 annehmen kann und vorzugsweise 2 ist, für a = 2 die Reste R⁷ gleich oder verschieden sein können, für b = 2 die Reste R⁸ gleich oder verschieden sein können und für c = 2 die Reste R^{s} gleich oder verschieden sein können.

Dabei ist eine Ausführungsform bevorzugt, bei der a = 1, b = 0 und c = 1, d.h. es handelt sich bei I bevorzugt um eine Siloxaneinheit des Typs [R⁷R^{s}SiO_{2/2]} (d.h. des allgemeinen Typs D der Silikonterminologie), die in allen Ausführungsformen der Erfindung besonders bevorzugt ist.

Bevorzugte Reste R⁷ sind ausgewählt aus Methyl, Ethyl, Propyl und Phenyl, und vorzugsweise ist R⁷ = Methyl.

Ferner weist das erfindungsgemäße Thioether-funktionalisierte Organopolysiloxan vorzugsweise die Struktureinheit II auf

[R⁹R¹⁰SiO_{2/2}] (II),

wobei R⁹ und R¹⁰ lineare, verzweigte oder cyclische organische Reste bedeuten und gleich oder verschieden sein können, und wobei insbesondere R⁹ und R¹⁰ gleich sind und aus Methyl, Ethyl, Propyl und Phenyl ausgewählt sind, vorzugsweise Methyl. R⁹ und/oder R¹⁰ können auch Alkylreste, die von Sauerstoffatomen unterbrochen sind, wie - (C₂H₄O)ᵤ,R", -(C₃H₆O)ᵤ,R", -(C₂H₄O)ᵤ,(C₃H₆O)ᵥ,R" und -(C₄H₈O)ᵤ,R", wobei u', v' eine ganze Zahl von 1 bis 50, vorzugsweise von 1 bis 15, ist und R" ein Wasserstoffatom oder ein Kohlenwasserstoffrest mit 1 bis 8 Kohlenstoffatomen, bevorzugt Wasserstoff, ein Methyl- oder Butylrest ist, und weiterhin Alkylreste, die von Schwefelatomen unterbrochen sind, wie -(C₂H₄S)ᵤ,R" und -(C₃H₆S)ᵤ,R", wobei u' und R" die oben dafür angegebene Bedeutung haben, sein.

Darüber hinaus kann das erfindungsgemäße Organopolysiloxan die Struktureinheit III aufweisen,

[R¹¹R¹²R¹³SiO_{1/2}] (III),

wobei
- R¹¹, R¹²: lineare, verzweigte oder cyclische organische Reste sind und gleich oder verschieden sein können und
- R¹³: ein linearer, verzweigter oder cyclischer organischer Rest, der über ein Sauerstoffatom gebunden sein kann, oder Hydroxy ist.

In Struktureinheit III sind bevorzugte Bedeutungen für R¹¹ und R¹² solche, bei denen R¹¹ und R¹² gleich sind und ausgewählt sind aus Methyl, Ethyl, Propyl und Phenyl, wobei besonders bevorzugt ist, dass R¹¹ und R¹² gleich sind und Methyl sind.

Bevorzugte Bedeutungen für R¹³ sind ausgewählt aus Methyl, Ethyl, Propyl, Phenyl, Methoxy, Ethoxy, Propoxy, Phenoxy und Hydroxy, wobei Methyl, Methoxy, Ethoxy und Hydroxy bevorzugt sind, insbesondere Methoxy, Ethoxy und Hydroxy. R¹³ kann auch ein Alkylrest, der von Sauerstoffatomen unterbrochen ist, wie - (C₂H₄O)_{u"}R''', -(C₃H₆O)_{u"}R''', -(C₂H₄O)_{u"}(C₃H₆O)_{v"}R''' und -(C₄H₈O)_{u"}R''', wobei u", v" eine ganze Zahl von 1 bis 50, vorzugsweise von 1 bis 15, ist und R" ein Wasserstoffatom oder ein Kohlenwasserstoffrest mit 1 bis 8 Kohlenstoffatomen, bevorzugt Wasserstoff, ein Methyl- oder Butylrest ist, und weiterhin Alkylreste, die von Schwefelatomen unterbrochen sind, wie -(C₂H₄S)_{u"}R''' und -(C₃H₆S)_{u"}R''', wobei u" und R''' die oben dafür angegebene Bedeutung haben, sein.

Eine bevorzugte Ausführungsform der Erfindung sind lineare Polyorganosiloxane, welche die Struktureinheiten I, II und III aufweisen und wie folgt zusammengesetzt sind:

[I]_{m[}II]ₙ[III]₂,

wobei

n eine Zahl im Bereich von 10 bis 500 ist, vorzugsweise 50 bis 400, insbesondere 120 bis 300, beispielsweise 140 bis 200, wie etwa 160, und m eine Zahl im Bereich von 1 bis 100 ist, vorzugsweise 1 bis 10, insbesondere 1 bis 8, wie 1 oder 3 bis 6, und

die obigen Ausführungen für die Bedeutung der Gruppen der Struktureinheiten I, II und III sowie Aussagen zu bevorzugten Ausführungsformen entsprechen gelten.

In einer weiteren bevorzugten Ausführungsform ist das Thioether-funktionalisierte Organopolysiloxan dadurch gekennzeichnet, dass es die Struktur IV besitzt 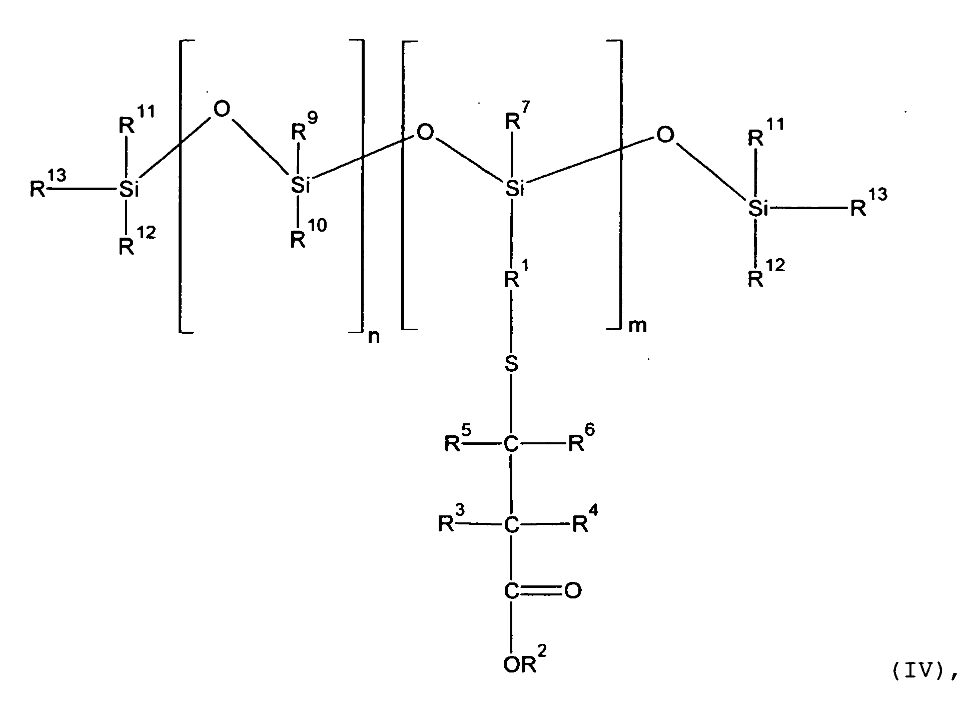 wobei n eine Zahl im Bereich von 10 bis 500 ist, vorzugsweise 50 bis 400, insbesondere 120 bis 300, beispielsweise 140 bis 200, und m eine Zahl im Bereich von 1 bis 100 ist, vorzugsweise 1 bis 10, insbesondere 1 bis 8, wie 1 oder 3 bis 6.

### Darüber hinaus ist die Struktur V

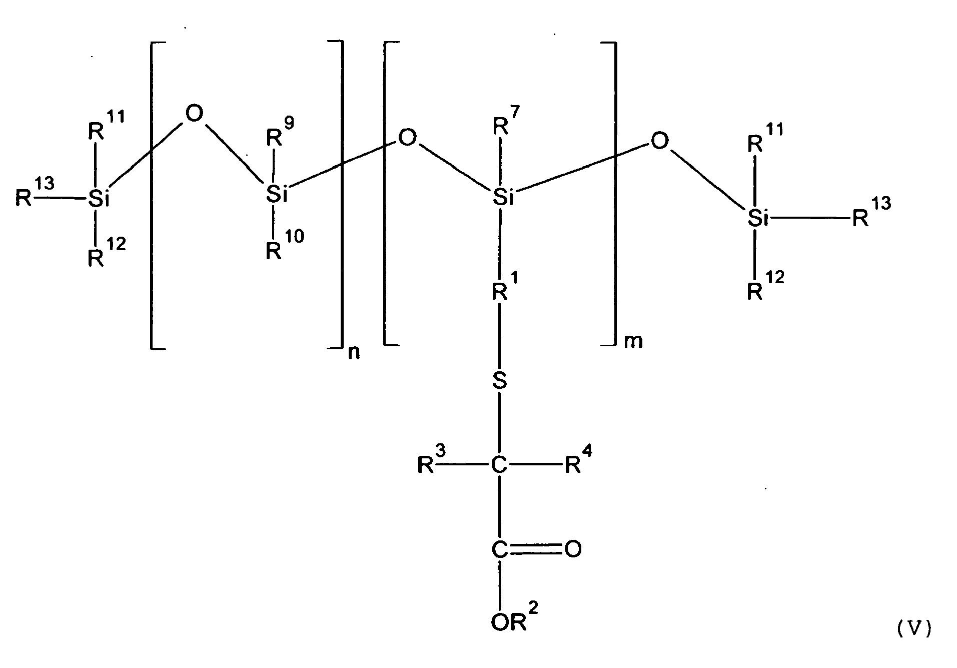

bevorzugt, wobei n eine Zahl im Bereich von 10 bis 500 ist, vorzugsweise 50 bis 400, insbesondere 120 bis 300, beispielsweise 140 bis 200, m eine Zahl im Bereich von 1 bis 100 ist, vorzugsweise 1 bis 10, insbesondere 1 bis 8, wie 1 oder 3 bis 6.

Ferner ist eine Ausführungsform bevorzugt, bei der das Organopolysiloxan die Struktur VII besitzt 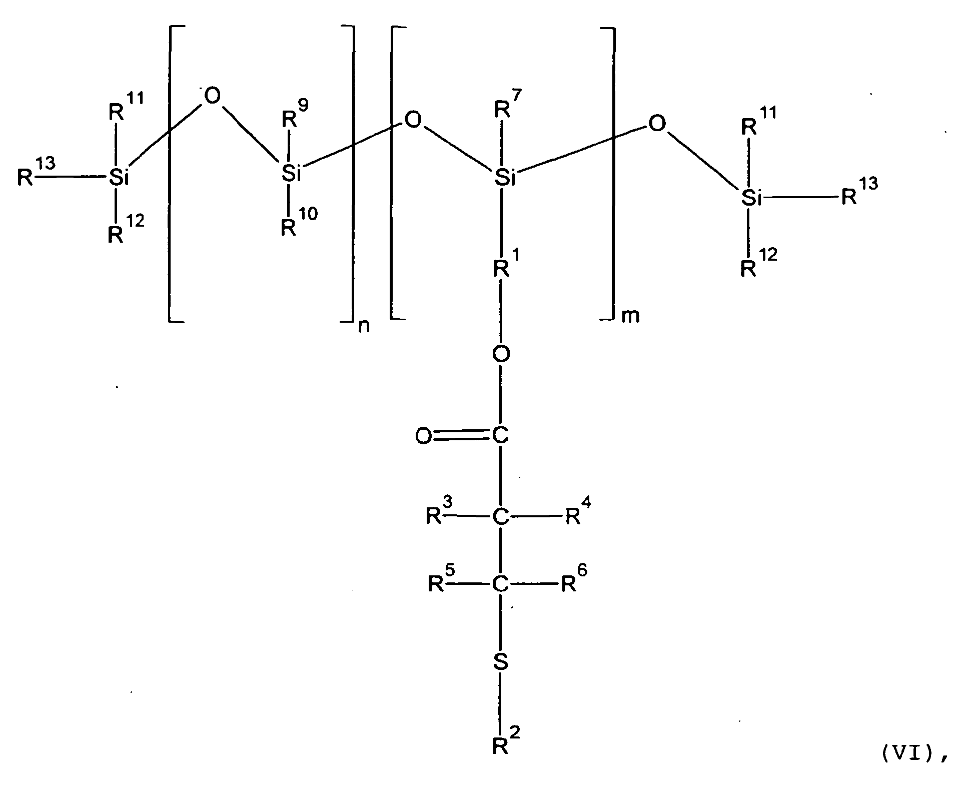 wobei n eine Zahl im Bereich von 10 bis 500 ist, vorzugsweise 50 bis 400, insbesondere 120 bis 300, beispielsweise 140 bis 200, und m eine Zahl im Bereich von 1 bis 100 ist, vorzugsweise 1 bis 10, insbesondere 1 bis 8, wie 1 oder 3 bis 6.

Letztendlich ist erfindungsgemäß ein Organopolysiloxan bevorzugt, das die Struktur VII 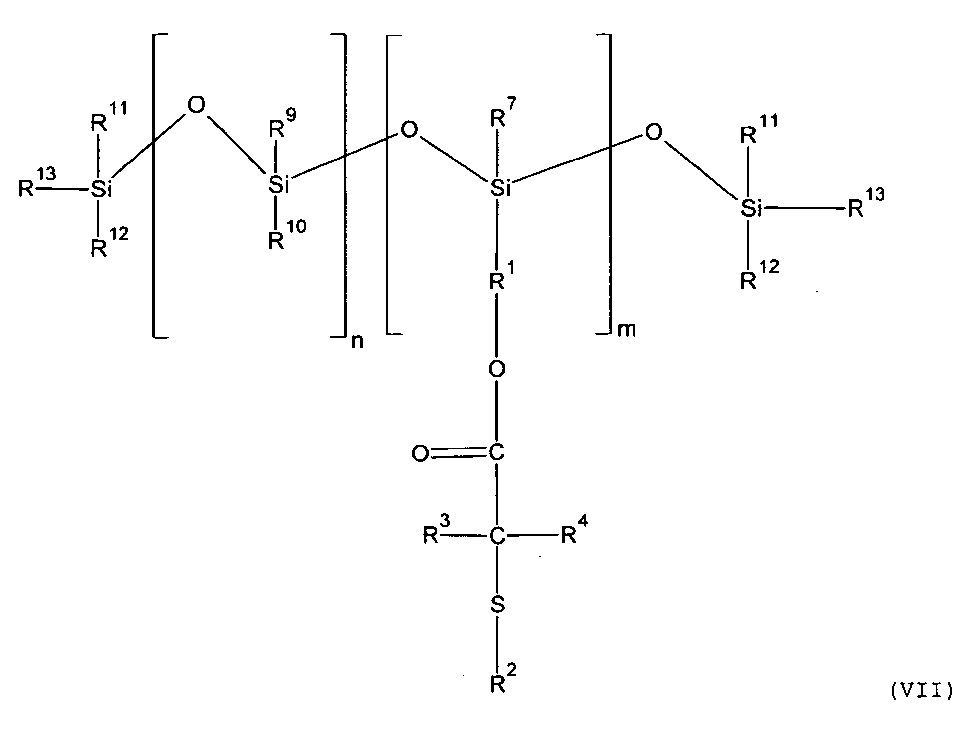 besitzt, wobei n eine Zahl im Bereich von 10 bis 500 ist, vorzugsweise 50 bis 400, insbesondere 120 bis 300, beispielsweise 140 bis 200, und m eine Zahl im Bereich von 1 bis 100 ist, vorzugsweise 1 bis 10, insbesondere 1 bis 8, wie 1 oder 3 bis 6.

In den Strukturen IV bis VII besitzen die Reste R¹ bis R¹³ die oben angegebene Bedeutung. Aussagen zu bevorzugten Ausführungsformen gelten entsprechend.

Die Strukturen IV bis VII weisen ein Polysiloxangrundgerüst und einen Rest R^{s} auf, dessen Gruppen E und A abgeleitet sind von (Meth)acrylsäurederivaten. Darauf wird nachfolgend bei der Diskussion des für die Herstellung der erfindungsgemäßen Thioether-funktionalisierten Organopolysiloxane vorzugsweise eingesetzten Verfahrens noch näher eingegangen.

In einer weiteren bevorzugten Ausführungsform ist E-A-R² abgeleitet von einem Alkenal, wie von Alk-2-en-1-al, z.B. *trans-*Oct-2-en-1-al, und R^{s} ist vorzugsweise -R¹-S-CR⁵R⁶-CR⁷R⁸-CHO, wobei
- R⁵, R⁶ und R⁷: vorzugsweise Wasserstoff sind und
- R⁸: vorzugsweise Wasserstoff oder eine C₁- bis C₁₀-Alkylgruppe ist, insbesondere eine C₂ bis C₆-Alkylgruppe, wie eine n-Pentylgruppe.

In den Resten R^{s} mit der Struktur R^{s3} und R^{s4}, die einen Rest R² aufweisen, kann dieser Rest R² gegebenenfalls eine weitere Gruppe mit Elektronenakzeptoreigenschaften des o.g. Typs A aufweisen. Diese weitere Gruppe mit Elektronenakzeptoreigenschaften kann mit dem Schwefelatom in R^{s} über eine zweiwertige Kohlenwasserstoffgruppe verbunden sind, so dass sich eine Struktur -R¹-A¹-E¹-S-E²-A²-R¹⁴ ergibt, wobei A¹ und A² die oben für A angegebene Bedeutung haben und gleich oder verschieden sein können, E¹ und E² die oben für E angegebene Bedeutung haben und gleich oder verschieden sein können, und R¹⁴ die oben für R² angegebene Bedeutung hat (vgl. u.a. nachfolgendes Beispiel I-4).

Die erfindungsgemäßen Organopolysiloxane können eine verzweigte oder eine geradkettige Struktur aufweisen. Bevorzugte erfindungsgemäße Thioether-funktionalisierte Organopolysiloxane weisen eine im Wesentlichen geradkettige Struktur auf.

Dabei ist es in Abhängigkeit von der gewünschten Anwendung möglich, die Gruppe R^{s} in dem erfindungsgemäßen Organopolysiloxan verschieden anzuordnen:
- Für die Behandlung von Leder ist es bevorzugt, dass R^{s} an das Siliziumatom einer endständigen Gruppe des allgemeinen Typs M (der Silikon-Terminologie) gebunden ist, wobei für diese Anwendung auch seitenständige Modifikationen des Typs D nützlich sein können.
- Für die Textil- und Faserausrüstung ist es bevorzugt, dass R^{s} an das Siliziumatom einer Gruppe des allgemeinen Typs D (der Silikon-Terminologie) gebunden ist, wobei in speziellen Anwendungen auch eine Verknüpfung des Typs M sehr brauchbare Ergebnisse liefert.
- Beim Einsatz als Verarbeitungshilfe für Gummi ist es möglich, dass R^{s} an das Siliziumatom einer endständigen Gruppe des allgemeinen Typs M (der Silikon-Terminologie) gebunden ist und/oder dass R^{s} an das Siliziumatom einer Gruppe des allgemeinen Typs D (der Silikon-Terminologie) gebunden ist.

Die erfindungsgemäßen Organopolysiloxane enthalten bevorzugt weniger Siloxaneinheiten mit der Struktureinheit III im Vergleich zur Anzahl der Siloxaneinheiten der Struktureinheit II. Die erfindungsgemäßen Organopolysiloxane enthalten ferner bevorzugt weniger Siloxaneinheiten mit der Struktureinheit I im Vergleich zur Anzahl der Siloxaneinheiten mit den Struktureinheiten II und III.

Die erfindungsgemäßen Organopolysiloxane haben bevorzugt eine Viskosität von 10 - 5 000 000 mm²/s bei 25°C, vorzugsweise eine Viskosität von 50 - 100 000 mm²/s bei 25°C und besonders bevorzugt eine Viskosität von 250 - 10 000 mm²/s bei 25°C, z.B. etwa 1 000 - 5 000, 5 000 - 10 000 oder 10 000 - 30 000 mm²/s bei 25°C, gemessen nach DIN 51562/1. Insbesondere sind erfindungsgemäße Organopolysiloxane bevorzugt, die eine Viskosität bei 25 °C von 100 bis 3 000 mm²/s oder - bei Anwendung als Emulsion - bis 1 000 000 mm²/s besitzen.

### 2. Verfahren

Bei dem erfindungsgemäßen Verfahren zur Herstellung der beschriebenen Organopolysiloxane werden die Komponenten (a) Schwefel-funktionalisierte Verbindung, (b) Reagenz mit aktivierter Doppelbindung und (c) Silikonmonomer miteinander umgesetzt.

Bevorzugt ist ein Verfahren, bei dem
- ein Mercapto-funktionalisiertes Silan als Schwefel-funktionalisierte Verbindung a) eingesetzt wird,
- ein Methacrylsäureester als Reagenz mit aktivierter Doppelbindung b) eingesetzt wird und
- ein cyclisches Siloxan als Silikonmonomer c) eingesetzt wird,

Beispielsweise können die erfindungsgemäßen Organopolysiloxane durch Modifikation von Mercaptoalkyltrialkoxysilanen oder Mercaptoalkylalkyldialkoxysilanen mit ungesättigten organischen Verbindungen, deren ungesättigte (beispielsweise Alkylen)-Gruppe durch benachbarte Heteroatome aktiviert ist, und anschließende Polymerisation mit vorzugsweise Octamethyltetrasiloxan oder anderen cyclischen oder auch linearen Siloxanen wie Hydroxy-polydimethylsiloxan, Dihydroxypolydimethylsiloxan oder Dialkoxypolydimethylsiloxan hergestellt werden.

Alternativ kann auch von Methacrylsäurealkyltrialkoxysilan oder Methacrylsäurealkyl-alkyldialkoxysilan und organischen Thiolen mit anschließender Polymerisation mit Octamethyltetrasiloxan oder anderen cyclischen oder auch linearen Siloxanen ausgegangen werden.

Beispielhafte Synthesewege zur Herstellung der erfindungsgemäßen Organopolysiloxane sind nachfolgend aufgeführt:
2.1 Synthesevariante zur Herstellung des erfindungsgemäßen Organopolysiloxans mit der Thiogruppe in Nachbarschaft zur Silikonkette
2.1.1 Synthese der Siloxankette durch Polymerisation/Polykondensation
2.1.1.1 Über thiofunktionelles Siloxan
   In einem ersten Schritt werden Schwefelsilan und Silikonmonomer (beispielsweise Cyclosiloxan, z.B. D₄, oder kurzkettige lineare Siloxane) durch Polymerisation/Polykondensation zu Thiofunktionellem Polysiloxan umgesetzt. Dieses thiofunktionelle Polysiloxan wird in einem zweiten Schritt mit einem Reagenz mit aktivierter Doppelbindung umgesetzt, um das erfindungsgemäße Thioether-funktionelle Organopolysiloxan zu ergeben.
   Als "Schwefelsilan" geeignet sind vorzugsweise: 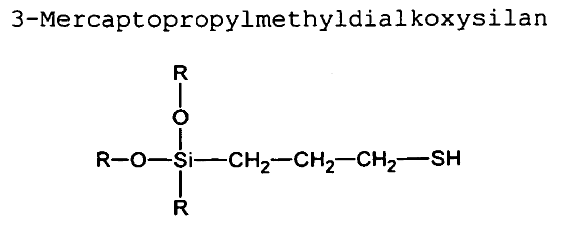 und 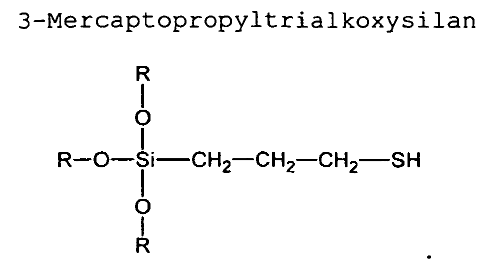 Bei Einsatz dieser Thiole ergibt sich für R¹ die Bedeutung -(CH₂)₃-. Dabei ist die Addition des Protons des Thiols sowohl an das α-C-Atom des Säureteils des (Meth)acrylsäureesters wie auch an das β-C-Atom des Säureteils des (Meth)acrylsäureesters möglich. Wenn das Proton der Thiolgruppe an die Methylen (CH₂)-Gruppe des (Meth)acrylsäureesters addiert, dann resultiert eine Gruppe E mit einem (1) Kohlenstoffatom in der S und A verbindenden Kette, und es kommt zur Bildung einer seitenständigen Methylgruppe (vgl. die Strukturen V und VII). Demgegenüber bildet sich bei Addition des Schwefelatoms an die CH₂-Gruppe des (Meth)acrylsäureesters eine Gruppe E mit zwei (2) Kohlenstoffatomen in der S und A verbindenden Kette (vgl. die Strukturen V und VI). Im Endprodukt sind beide Variationen vertreten, wenn auch in teilweise unterschiedlichen Verhältnissen.
2.1.1.2 Über modifiziertes Silan
   In einem ersten Schritt wird Schwefelsilan mit einem Reagenz mit aktivierter Doppelbindung durch katalytische Addition zu einem Thioether-modifizierten Silan umgesetzt. Dieses modifizierte silan wird dann in einem zweiten Schritt mit Silikonmonomer (beispielsweise Cyclosiloxan, z.B. D₄, oder kurzkettige lineare Siloxane) durch Polymerisation/Polykondensation zu dem erfindungsgemäßen Thioether-funktionalisierten Organopolysiloxan umgesetzt.
   Beide Synthesevarianten können als 2-Stufenprozess (nacheinander), als 1-Stufenprozess (Eintopfreaktion) oder in situ, z.B. als Emulsionspolymerisation durchgeführt werden. Bei den Varianten 2-Stufenprozess und Eintopfreaktion ist natürlich das erfindungsgemäße Organopolysiloxan emulgierbar.
2.1.2 Herstellung der Silikonkette durch Äquilibrierung (Schritt 1) und anschließende Herstellung des thiofunktionellen Siloxans (Schritt 2)
   In einem ersten Reaktionsschritt wird ein Silikonmonomer (beispielsweise Cyclosiloxan, z.B. D₄, oder kurzkettige lineare Siloxane) mit einem Öl mit Si-H-Funktion zu einem SiHfunktionalisierten Silikonöl umgesetzt. Das SiH-funktionalisierte Silikonöl wird dann durch katalytische Hydrosilylierung mit Allylchlorid zu einem Chlorpropyl-funktionalisierten Silikonöl umgesetzt. Das Chlorpropyl-funktionalisierte Silikonöl wird dann in einer weiteren Stufe durch Thiolierung umgesetzt, z.B. über die Thioharnstoffroute, um ein thiofunktionelles Siloxan zu erhalten. Das thiofunktionelle Siloxan wird dann in einem letzten Reaktionsschritt mit einem Reagenz mit aktivierter Doppelbindung zu dem erfindungsgemäßen Thioether-funktionalisierten Organopolysiloxan umgesetzt.
2.2 Synthesevariante zur Herstellung des erfindungsgemäßen Organopolysiloxans mit der Carbonylgruppe (bzw. vor der Reaktion vorhandenen aktivierten Doppelbindung) in Nachbarschaft zur Silikonkette
2.2.1 Synthese der Siloxankette durch Polymerisation/Polykondensation
2.2.1.1 Über z.B. Methacrylfunktionelles Siloxan
   In einem ersten Reaktionsschritt wird ein Methacrylsilan mit Silikonmonomer (beispielsweise Cyclosiloxan, z.B. D₄, oder kurzkettigen lineare Siloxane) durch Polymerisation/Polykondensation zu einem methacrylfunktionellen Siloxan umgesetzt. Die Umsetzung des Acrylsilans kann vorzugsweise über eine saure Äquilibrierung mit Hydroxypolydimethylsiloxan erfolgen, bzw. über die Hydrosilylierung eines ketten- oder endständigen Si-H-Öls. Das methacrylfunktionelle Siloxan wird anschließend durch eine Reaktion mit einem thiofunktionellen Reagenz zu dem erfindungsgemäßen Thioether-funktionalisierten Organopolysiloxan umgesetzt.
2.2.1.2 Über modifiziertes Silan
   In einem ersten Reaktionsschritt wird ein Methacrylsilan mit einem thiofunktionalisierten Reagenz durch katalytische Addition zu einem modifizierten Silan umgesetzt. Das modifizierte Silan wird dann einer Polymerisation/Polykondensation mit Silikonmonomer (beispielsweise Cyclosiloxan, z.B. D₄ gemäß der Silikon-Terminologie, oder kurzkettige lineare Siloxane) unterworfen, um erfindungsgemäßes Organopolysiloxan zu erhalten.
   Beide Synthesevarianten können als 2-Stufenprozess (nacheinander), als 1-Stufenprozess (Eintopfreaktion) oder *in* situ, z.B. als Emulsionspolymerisation durchgeführt werden. Bei den Varianten 2-Stufenprozess und Eintopfreaktion ist natürlich das erfindungsgemäße Organopolysiloxan emulgierbar.
2.2.2 Herstellung der Silikonkette durch Äquilibrierung (Schritt 1) und anschließende Herstellung des z.B. methacrylfunktionellen Siloxans (Schritt 2)
   In einem ersten Reaktionsschritt wird - wie bei dem Verfahren gemäß 2.1.2 - Silikonmonomer mit SiH-funktionalisiertem Öl äquilibriert, um SiH-funktionelles Silikonöl zu erhalten. Das SiH-funktionelles Silikonöl wird dann mit Allylmethacrylat einer katalytischen Hydrosilylierung unterworfen, um ein methacrylfunktionalisiertes Silikonöl zu erhalten. Letztendlich wird dieses methacrylfunktionalisierte Silikonöl durch Reaktion mit einem thiofunktionellen Reagenz zu den erfindungsgemäßen Thioether-funktionalisierten Organopolysiloxan umgesetzt.

Durch einfache Variation der molaren Verhältnisse ist es dem Fachmann bei dem erfindungsgemäßen Verfahren möglich, eine Vielzahl von erfindungsgemäßen Organopolysiloxanen mit unterschiedlichen Molgewichten, Substituenten, Substitutionsgraden und Gehalten an Thioether-Schwefelatomen zu synthetisieren und so die physikochemischen und anwendungstechnischen Eigenschaften der erfindungsgemäßen Organopolysiloxane gezielt zu beeinflussen.

Ein weiterer Vorteil ist es, dass es dem Fachmann möglich ist, zur Herstellung der erfindungsgemäßen Organopolysiloxane auf Rohstoffe mit unerwünschten toxikologischen oder ökotoxikologischen Eigenschaften zu verzichten. Ebenso kann auf den Einsatz von einzelnen Komponenten im Überschuss zur Erzielung befriedigender Umsätze verzichtet werden.

Im erfindungsgemäßen Verfahren können die Edukte sowohl im Eintopfverfahren, bei dem alle Komponenten von Beginn an homogen vermischt vorliegen, als auch durch nacheinander erfolgende Dosierung einzelner Edukte miteinander in Kontakt gebracht werden. Die Reihenfolge der Zugabe der Edukte kann dabei beliebig gewählt werden. Es ist dem Fachmann möglich, eine große Zahl geeigneter Zugabereihenfolgen zu finden, die die Herstellung der erfindungsgemäßen Organopolysiloxane erlaubt. Das erfindungsgemäße Verfahren kann ansatzweise, halbkontinuierlich oder vollkontinuierlich durchgeführt werden.

Ein weiterer Gegenstand der Erfindung sind Zubereitungen, die mindestens ein Thioether-funktionalisiertes Organopolysiloxan enthalten. Unter erfindungsgemäßen Zubereitungen versteht man z.B. Lösungen, Mischungen, Emulsionen und Dispersionen der erfindungsgemäßen Organopolysiloxane.

Als Lösungsmittel kommen je nach molekularem Aufbau der Thioether-funktionalisierten Organopolysiloxane unpolare und polare Lösungsmittel in Betracht. Geeignete unpolare Lösungsmittel sind z.B. Toluol, Testbenzin, Xylol, Benzol, Ethylbenzol und chlorierte Kohlenwasserstoffe. Geeignete polare Lösungsmittel sind z.B. ein- und mehrwertige Alkohole mit einem Molekulargewicht von 50 bis ca. 2000 g/mol. Derartige zum erfindungsgemäßen Einsatz geeignete mehrwertige Alkohole sind dem Fachmann bekannt und in großer Anzahl kommerziell erhältlich. Beispiele sind Glycerin, Ethylenglycol, Polyethylenglycol, Polypropylenglycol, Polyoxyethylenpolyoxypropylenmischpolymerisate mit statistischer oder blockartiger Verteilung, Dipropylenglycol, Dipropylenglycolmonoethylether, Butyldiglycol, 1,3-Propandiol, Pentaerythrit und besonders bevorzugt 1,2-Propandiol und Dipropylenglycol. Je nach Einsatz der erfindungsgemäßen Thioether-funktionalisierten Organopolysiloxane ist es dem Fachmann möglich, auch weitere geeignete Lösungsmittel auszuwählen.

Des weiteren ist es möglich, die erfindungsgemäßen Organopolysiloxane in bestehende Produkte einzubringen, bzw. mit anderen Verbindungen zu mischen und diese Mischungen dann weiter zu verarbeiten. So können die erfindungsgemäßen Thioether-funktionalisierten Organopolysiloxane z.B. mit anderen Silikonpolymeren, wie Aminosilikonölen, Polyethersiloxanen, Silikonwachsen, Alkylpolyethersiloxanen, Polydimethylsilikonölen, Polydimethylsiloxanbetainen, Polydimethylsiloxandiolen, Silikonharzen, aber auch mit Mineralölen, natürlichen und synthetischen Wachsen und weiteren Verbindungen und Polymeren gemischt und als Mischung oder nach einem weiteren Verarbeitungsschritt, z.B. nach Emulgieren oder Dispergieren, eingesetzt werden.

Ist eine Applikation der erfindungsgemäßen Organopolysiloxane aus wässrigem Medium erwünscht, können Emulsionen oder Dispersionen hergestellt werden. Derartige Emulsionen und Dispersionen können neben Wasser zusätzlich Dispergiermittel, Verdikkungsmittel, Biozide und weitere Bestandteile enthalten. Geeignete Dispergiermittel sind vorzugsweise nichtionische, anionische oder kationische Emulgatoren. In Produkten zur Verbesserung des Weichgriffs von Textilien, Papier- und Lederprodukten können ebenso organische, quartäre Ammoniumverbindungen und/oder Betaine enthalten sein. Geeignete kationenaktive Emulgatoren sind z.B. Didecyldimethylammoniumchlorid, Dioctadecyldimethyl-ammoniumchlorid sowie deren entsprechende Hydroxide, aber auch verschiedene Imidazoliniumverbindungen. Weiterhin sind Betaine als Emulgatoren geeignet, z.B. Fettsäureamidoalkylbetain, Kokosamidopropylbetain, sowie Mischungen von Betainen bzw. kationenaktiven Emulgatoren mit nichtionogenen Verbindungen, beziehungsweise ausschließlich nichtionogene oder Mischungen verschiedener nichtionogener Emulgatoren. Nichtionogene Emulgatoren können durch Anlagerung von Ethylenoxid und anderen Alkylenoxiden an Verbindungen mit acidem Wasserstoff, aber auch durch eine Reihe weiterer Verfahren erhalten werden. Eine große Anzahl solcher nichtionogener Emulgatoren sind für den Einsatz geeignet. Insbesondere geeignet sind Fettsäurepartialester von mono- oder polyfunktionellen Alkoholen mit 1 bis 12 Kohlenstoffatomen im Alkohol. Beispiele für derartige polyfunktionelle Alkohole sind Ethylenglycol, Glycerol, Xylitol, Sorbitol, Sorbitan und Pentaerythritol. Der Fettsäureesterteil dieser nichtionogenen Emulgatoren besteht zumeist aus 12 bis 22 Kohlenstoffatomen und kann z.B. ein Lauryl-, ein Oleyl-, ein Stearyl- oder ein Myristylrest sein. Derartige Fettsäurepartialester von polyfunktionellen Alkoholen können weiterhin mit Alkylenoxiden, wie z.B. Ethylenoxid, umgesetzt werden. Beispiel für derartige nichtionogene Emulgatoren sind ethoxyliertes Sorbitanstearat oder ethoxyliertes Sorbitanoleat. Weiterhin können auch Anlagerungsprodukte von Alkylenoxiden an aliphatische, geradkettige oder verzweigte Alkohole mit 6 bis 22 C-Atomen, z.B. Isotridecylethoxylat, oder an alkylierte Phenole, z.B. Nonylphenolethoxylate, verwendet werden. Des weiteren können alkoxylierte Fettamine als nichtionogene Emulgatoren Verwendung finden. Gut geeignet zur Verwendung als Emulgatoren sind auch hydrophil modifizierte Organopolysiloxane, z.B. Organopolysiloxane in denen 1-35% der Siliciumatome mit seitenständigen Polyethergruppen, die 2 - 50, und vorzugsweise 6 - 35 angelagerte Ethylenoxid- und/oder Propylenoxidgruppen in statistischer oder blockartiger Verteilung enthalten. Die weiteren an Si-Atome gebundenen Substituenten in derartigen Organopolysiloxanen können aus einer oder mehreren Alkylgruppen mit 1-20 Kohlenstoffatomen oder Alkenylgruppen mit 2-20 Kohlenstoffatomen bestehen. Weiterhin geeignet sind mit Polyethern aus Ethylen- und/oder Propylenoxid (α,ω-substituierte Polydimethylsiloxane.

Weitere geeignete nichtionogene Emulgatoren sind Alkylpolyglucoside. Zum Einsatz in den erfindungsgemäßen Zusammensetzungen sind weiterhin anionische Tenside geeignet, z.B. Alkyl- oder Arylpolyalkylenglycolethercarbonsäuren, Alkyl- oder Arylpolyalkylenglycolethersulfate, Alkylbenzolsulfonate, Alkylbenzolsulfonsäuren, Aminsalze von Carbonsäuren, Fettalkoholpolyalkylenglycolethercarboxylate und -sulfate, Fettalkoholsulfate, Paraffinsulfonate, Phosphorsäureester, Rizinusölsulfonate und Sulfosuccinate. Besonders geeignet zum Einsatz in den erfindungsgemäßen Zubereitungen sind kationische und nichtionische Emulgatoren und Mischungen von kationischen und nichtionischen Emulgatoren. Geeignete Emulgatoren sind dem Fachmann bekannt und kommerziell erhältlich. Geeignete Verdickungsmittel sind z.B. organisch modifizierte Schichtsilicate, z.B. organisch modifizierter Bentonit, Polyacrylate, Methylcellulose und andere Cellulosederivate, Rizinusölderivate, Polyurethan-Polyharnstoff-Polyether-Copolymere, Poly-N-vinylpyrrolidon und eine Reihe weiterer Substanzen, die dem Fachmann bekannt und kommerziell erhältlich sind. Beispiele für Biozide oder Konservierungsmittel sind bestimmte quartäre Ammoniumverbindungen, Formaldehyd bzw. Formaldehyddepotstoffe, N-Methylisothiazolinon, 5-Chlor-N-methylisothiazolinon, 1,2-Benzisothiazolin-3-on und dessen Salze. Derartige bakterizid wirkende Bestandteile sind dem Fachmann bekannt und kommerziell erhältlich. Beispielsweise können Stapelfasern mit einem Polyester- oder Polyamidkern mit einem ausgeprägten Recovery Effect, wie sie üblicherweise in Fiberfill-Anwendungen wie Kissen eingesetzt werden, mit den erfindungsgemäßen Organopolysiloxanen ausgerüstet werden.

Die erfindungsgemäßen Organopolysiloxane eignen sich zur Hydrophobierung von Fasern (z.B. PP, PE, PA, PES, PAC) und Vliesen für z.B. Hygieneanwendungen, als Textilweichmacher, für Coatings und Lackanwendungen, als spezielle Benetzungshilfen, Gummiverarbeitungshilfsmittel, zur Hydrophilierung und als Entschäumer. Durch die vergleichsweise einfache Verbindung von Silikonen zu organischem Rest und die Anordnung verschiedener organischer Funktionen in einem Polymer sind auch neue Materialien für Einsatzgebiete wie Leder, Kunststoffen, Gummi, Bautenschutz, Polish, Autopflege, Cleaning Products, Entschäumer, Kosmetik denkbar.

Die erfindungsgemäßen Organopolysiloxane und diese enthaltende Zubereitungen können beispielsweise zur Weichgriffausrüstung und/oder Hydrophobausrüstung von Textilien, als Prozesshilfsmittel zur Herstellung und zur Ausrüstung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege eingesetzt werden.

Unter Fasern und Textilien versteht man hierbei organische Fasern in Form von Fäden, Garnen, Vliesen, Matten, Strängen, unter Textilien alle gewebten, gestrickten, gewirkten Textilien in Form von Stoffbahnen, Kleidungsstücken oder Teilen von Kleidungsstücken und anderen Erzeugnissen, wie z.B. Planen oder Möbelstücken. Die mit den erfindungsgemäßen Thioether-funktionalisierten Organopolysiloxanen behandelten Fasern können aus Keratin, insbesondere Wolle, Baumwolle, Polyvinylalkohol, Vinylacetat, Rayon, Hanf, Seide, Polypropylen, Polyester, Polyurethan, Polyamid, Polyacrylat, Cellulose und Gemischen aus zwei oder mehr solcher Fasern bestehen. Die Faser- und Textilmaterialien können sowohl natürlichen oder synthetischen Ursprungs sein. Die Applikation der erfindungsgemäßen Organopolysiloxane zur Ausrüstung von Fasern und Textilien erfolgt in Form von Zubereitungen, insbesondere aus wässrigen Zubereitungen. Applikationsverfahren sind dem Fachmann bekannt und umfassen Ausziehverfahren, Foulard- und Jetfärbemaschinen, aber auch Tauchbäder, Gieß- und Streichverfahren, Sprühverfahren, Aufwalzen, Klotzen und Drucken. Durch Anwendung eines gezielt, gegebenenfalls durch Versuche, ausgewählten, erfindungsgemäßen Organopolysiloxans ist es dem Fachmann möglich, den damit ausgerüsteten Textilien und Fasern einen angenehmen und weichen Griff zu verleihen und dabei Textilien und Fasern zu erhalten, deren Wasseraufnahmefähigkeit nicht vermindert oder verlangsamt ist. Die Textilien können unter üblichen Bedingungen gewaschen werden, ohne dass es zu einer Verminderung der Weichgriffeigenschaften oder der Wasseraufnahmefähigkeit kommt. Die erfindungsgemäßen Organopolysiloxane können weiterhin zur Hydrophilierung von Fasern, Textilien und Nonwovens eingesetzt werden.

Hydrophobe Vliesstoffe aus Polypropylen-Stapelfaser- oder Spinnvliesen werden vielfach als sogenanntes Backsheet für Windeln eingesetzt und meist auf eine Folie laminiert. Für das Abdichten der Windel, also um Auslaufschutz zu gewährleisten, würde auch eine hydrophobe Folie alleine genügen. Vor allem bei Babywindeln wird jedoch sehr viel Wert auf einen möglichst textilen Eindruck der Windel gelegt. Durch das Laminieren der Folie mit einem hydrophoben Vlies erhält die Windel dementsprechend auch von außen einen textilen Charakter. Ein möglichster weicher Griffausfall des Backsheets suggeriert zusätzlichen Tragekomfort. Die Anforderungen an hydrophobe Weichmacher für diesen Einsatzzweck sind:
- kein negativer Einfluss auf die Hydrophobie, gewünscht ist eine Verbesserung der Hydrophobie,
- deutliche Verbesserung des Griffausfalls, Weichheit.

Der Vliesstoff soll ferner laminierbar, bedruckbar und nicht toxisch (nicht haut-, augenreizend, sensibilisierend) ausgerüstet werden. Durch erfindungsgemäße, Thioether-funktionalisierte Organopolysiloxane ausgerüstete Vliesstoffe erfüllen diese Anforderungen.

Die erfindungsgemäßen Organopolysiloxane können weiterhin in Wasch- und Reinigungsmitteln, auch in Kombination mit ausgewählten, für solche Produkte typischen, anionischen Tensiden verwendet werden. Durch die Anwendung kann insbesondere ein verbesserter Griff der Textilien nach der Wäsche erreicht werden. In Reinigungsmitteln kann z.B. eine Verbesserung der Reinigungswirkung durch bessere Substratbenetzung erreicht werden. Bevorzugt sind hier Reiniger für harte Oberflächen, wie z.B. Fußböden, Fliesen und Keramik.

Ein weiterer Schwerpunkt ist die Verwendung in Polituren und Pflegemitteln zur Behandlung harter Oberflächen. Bevorzugt sind hier lackierte Oberflächen, auf denen die erfindungsgemäßen Organopolysiloxane eine gute Haftung zeigen und z.B. Glanz, Kratzfestigkeit und Antistatik verbessern können.

Weiterhin können die erfindungsgemäßen Organopolysiloxane in Formulierungen für den Einsatz in automatischen Autowäschen eingesetzt werden. Eine nach der Wäsche aufgesprühte, diese enthaltende Zubereitung verbessert z.B. den Glanz und erhöht die Trocknungsgeschwindigkeit im nachfolgenden Trockenschritt.

Eine weitere Einsatzmöglichkeit der erfindungsgemäßen Organopolysiloxane besteht in der Verbesserung der Korrosionsbeständigkeit von Metallen während und nach mechanischer Bearbeitung unter Zuhilfenahme von Kühlschmiermitteln, denen die erfindungsgemäßen Organopolysiloxane zugesetzt wurden.

Des weiteren können die erfindungsgemäßen Organopolysiloxane auch in Formulierungen zur Haut- und Haarpflege wie Shampoos, Haarkonditioniermitteln, Haarsprays, Waschlotionen, Seifen, Cremes oder Rasierschäumen verwendet werden.

Ferner können die erfindungsgemäßen Organopolysiloxane Lacken zugefügt werden und als Slipadditive wirken.

Besonders bevorzugte erfindungsgemäße Organopolysiloxane besitzen eine Viskosität zwischen 200 und 1200 mPas und einen Schwefelgehalt von 0,35 - 0,50%. Sie sind klar, farblos und nahezu geruchlos. Zur Bereitstellung für die Applikation auf Fasern und Textilien können sie pur, in Lösung oder in Emulsion verwendet werden. Zur Herstellung einer Emulsion werden geeignete nichtionische und/oder anionische Tenside (Nonylphenolethoxylate, Fettalkoholethoxylate, Alkylsulfonsäuren bzw. -salze, usw.) benötigt.

Die vorliegende Erfindung wird durch die folgenden Ausführungsbeispiele näher beschrieben und erläutert.

### Beispiele

Die Hydrophobie wird ermittelt durch Messung des hydrostatischen Drucks, getestet nach standardisierter Prüfmethode WSP 80.6. Der Weichgriff wird mit Hilfe einer manuellen sensorischen Prüfung ermittelt (Paneltest).

Um hydrophobe Weichmacher miteinander vergleichen zu können, werden die Produkte in vergleichbarer Menge auf ein unbehandeltes Standardvlies appliziert, mindestens 24 h konditioninert und untersucht.

### I. Herstellung verschiedener erfindungsgemäßer Thioether-funktionalisierter Organopolysiloxane

### Beispiel I-1

2,1 g 2-Ethylhexylmethacrylat (etwa 0,01 mol), 1,9 g 3-Mercaptopropylmethyldimethoxysilan (etwa 0,01 mol), 20,0 g Octamethylcyclotetrasiloxan und 0,02g 80%ige Methansulfonsäure wurden in einen Mehrhalskolben gegeben und unter ständigem Rühren und Rückfluss auf 90°C erhitzt. Nach ca. 4 Stunden bei diesen Bedingungen wurden weitere 75,8 g Octamethylcyclotetrasiloxan und 0,18 g 80%ige Methansulfonsäure zugegeben. Das Gemisch wurde dann 8 Stunden lang auf 150°C erhitzt und gerührt. Anschließend wurde auf 60°C abgekühlt und die Säure durch Zugabe von 0,91 g 25%iger alkoholischer KOH neutralisiert. Der nicht umgesetzte Anteil an Octamethylcyclotetrasiloxan lag deutlich unter 10% und wurde anschließend durch Destillation entfernt.

Das erfindungsgemäße Organopolysiloxan wurde somit als Produkt der folgenden Struktur erhalten:

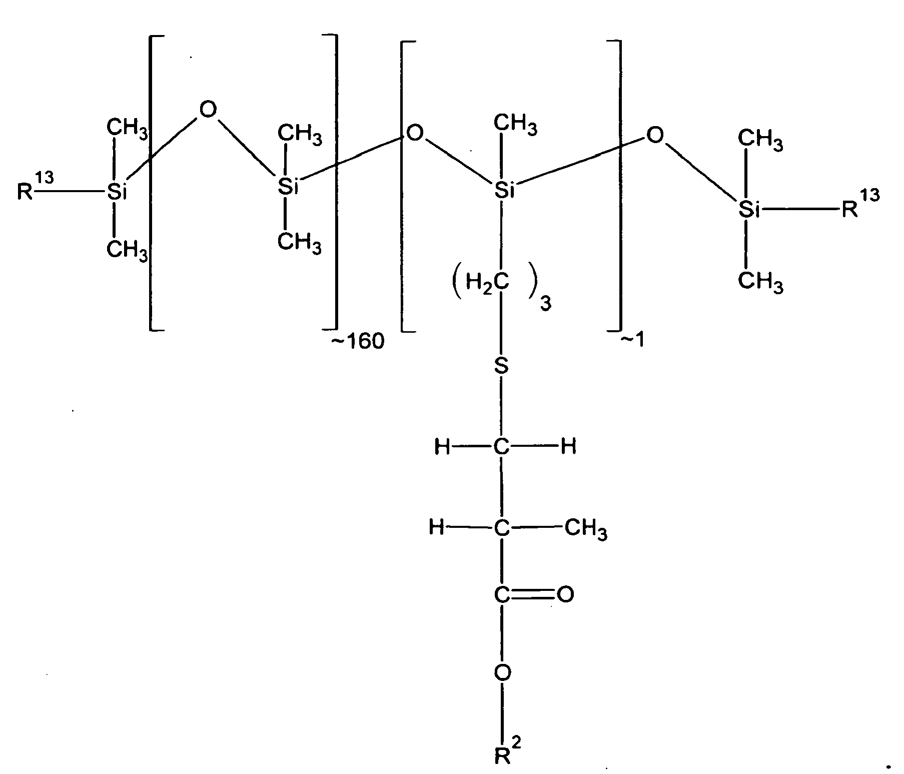

Dieses erfindungsgemäße Organopolysiloxan besitzt eine Viskosität zwischen 200 und 1200 mPas und einen Schwefelgehalt von 0,35 - 0,50%. Es ist klar, farblos und nahezu geruchlos. Mittels NMR wurden die folgenden mittleren Zusammensetzungen bestimmt:

| Ansatz | Monofunktionelle (terminale) Einheit M | Difunktionelle Einheit D | Erfindungsgemäße difunktionelle Einheit D |
|---|---|---|---|
| 1 | 2 | 158, 1 | 1,3 |
| 2 | 2 | 160,6 | 1,3 |
| 3 | 2 | 167,5 | 1,2 |
| 4 | 2 | 160,7 | 1,0 |

Zur Bereitstellung für die Applikation auf Fasern und Textilien kann das Polymer pur, in Lösung oder in Emulsion verwendet werden. Zur Herstellung einer Emulsion werden geeignete nichtionische und/oder anionische Tenside (Nonylphenolethoxylate, Fettalkoholethoxylate, Alkylsulfonsäuren bzw. -salze, usw.) benötigt.

### Beispiel I-2

Äquimolare Mengen Ethylmethacrylat und 3-Mercaptopropyltrimethoxysilan oder 3-Mercaptopropylmethyldimethoxysilan wurden durch mehrstündiges Rühren bei etwa 80°C umgesetzt, um das folgende Produkt zu erhalten:

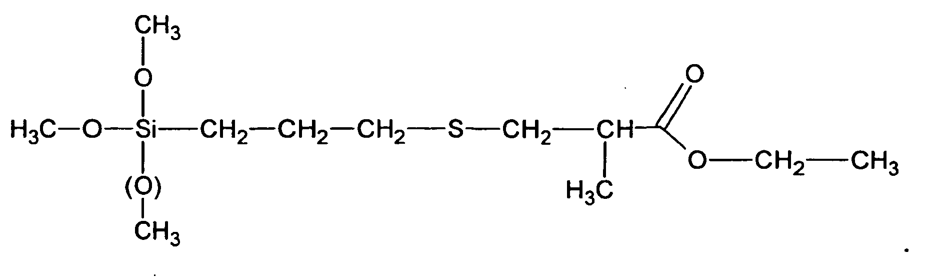

5 g des Produkts wurden mit 95 g α,ω-Hydroxypolydimethylsiloxan, 5g Isotridecanol 10 EO, 2 g Dodecylbenzolsulfonsäure und 300 g Wasser emulgiert, um eine Emulsion eines erfindungsgemäßen Thioether-funktionalisierten Organopolysiloxans zu erhalten. Nach 3 Tagen wurde die Emulsion mit Triethanolamin auf pH 7,0 neutralisiert.

Das erfindungsgemäße Organopolysiloxan wurde somit *in situ* hergestellt und als Emulsion erhalten.

### Beispiel I-3

90 g Octamethylcyclotetrasiloxan wurden zusammen mit 2,5 g 3-Mercaptopropylmethyldimethoxysilan (etwa 0,013 mol), 7 g Polydimethylsiloxan (10 mPas) 0,4 g Methansulfonsäure (80%) unter Rühren und Rückfluß auf 100°C erhitzt und etwa 1 Stunde lang gerührt. Danach wurde die Temperatur auf 160°C erhöht und weitere 5 Stunden lang gerührt. Nach Erreichen der gewünschten Viskosität wurde auf 100° C abgekühlt und 1,7 g trans-2-Oct-2-en-1-al (etwa 0,013 mol) zugegeben. Bei dieser Temperatur wurde 2 Stunden lang gerührt. Anschließend wurde die Säure durch Zugabe von 0,5 g Triethanolamin neutralisiert, um das erfindungsgemäße Organopolysiloxan mit der folgenden Struktur zu erhalten:

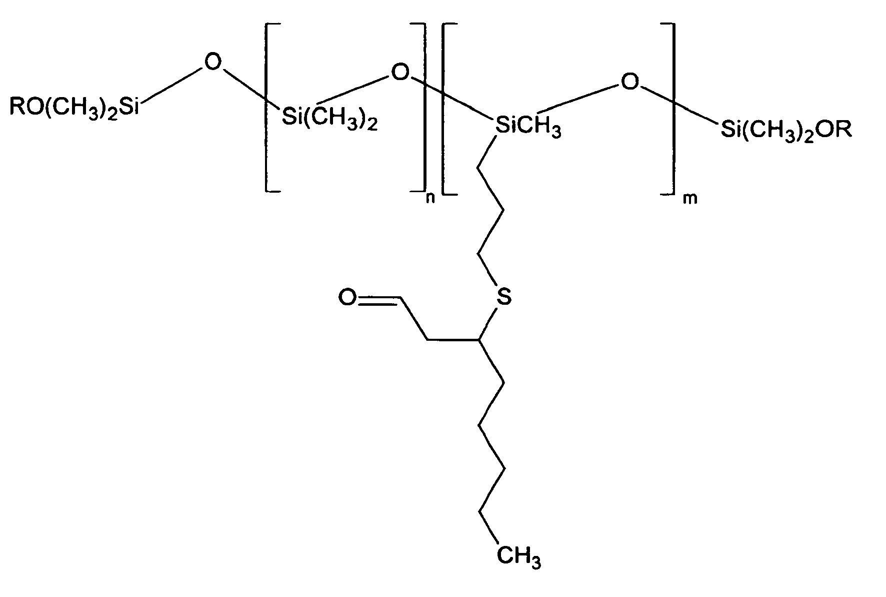

### Beispiel I-4

91 g Octamethylcyclotetrasiloxan, 3,4 g 3-Methacryloxypropyltrimethoxysilan, 2,0 g Polydimethylsiloxan (50 mPas) und 0,2 g 80%ige Methansulfonsäure wurden in einen Kolben vorgelegt und eine halbe Stunde lang bei 120°C und dann 5 Stunden lang bei 145°C gerührt. Anschließend wurden dem entstandenen Polymer 3,0 g Mercaptopropionsäureisooctylester zugesetzt. Dann wurde langsam abkühlen gelassen und noch etwa 2 Stunden lang kräftig bei 80°C gerührt. Dann wurde die Säure durch Zugabe von 0,37 g 25%iger alkoholischer KOH neutralisiert. Anschließend wurde das nicht umgesetzte Octamethylcyclotetrasiloxan abdestilliert, um ein erfindungsgemäßes Organopolysiloxan mit der folgenden Struktur zu erhalten:

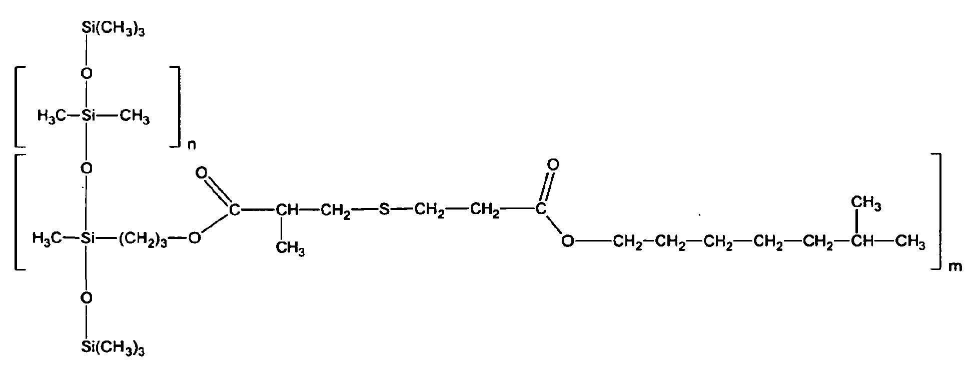

In dieser Ausführungsform besitzt R^{s} die Struktur R^{s3}, und R² ist abgeleitet von Mercaptopropionsäureisooctylester. In einer weiteren Ausführungsform ist R^{s} = R^{s3}, und R² ist abgeleitet von Thiomilchsäure.

### II. Anwendung erfindungsgemäßer Thioether-funktionalisierter Organopolysiloxane

### Beispiel II-1 (Herstellung)

Wie unter I beschrieben wurde 3-Mercaptopropylmethyldiethoxysilan mit 2-Ethylhexylmethacrylat umgesetzt. Es entstand ein modifiziertes Silan als Zwischenprodukt, das mit Cyclotetradimethylsiloxan unter Verwendung eines vorzugsweise sauren Katalysators zur Reaktion gebracht wurde, um das polymere Endprodukt mit der folgenden Struktur zu erhalten:

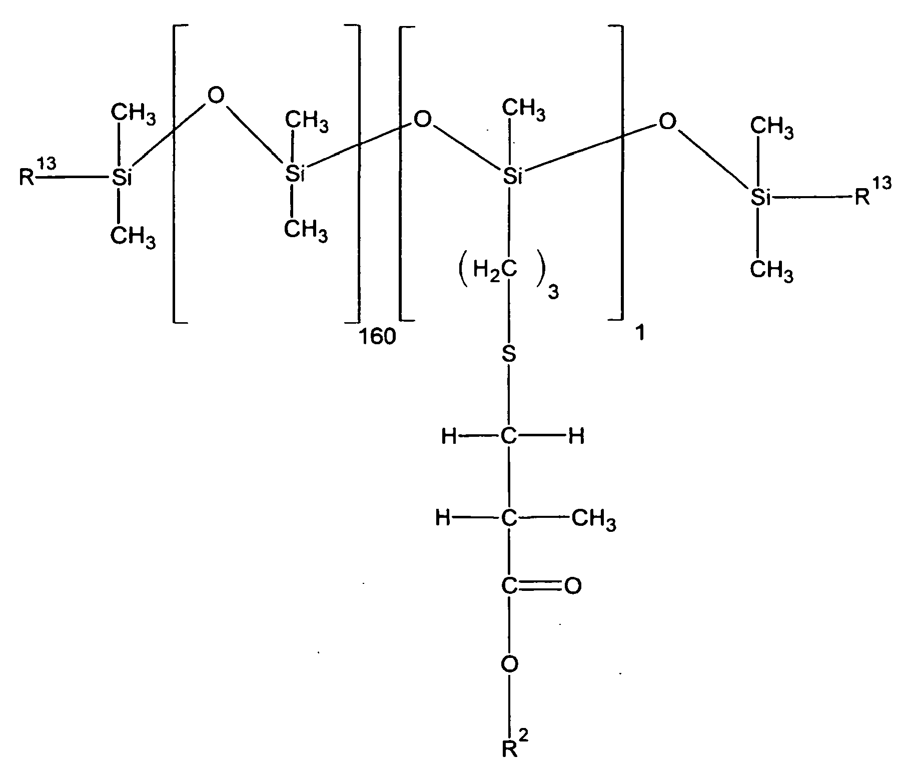

In diesem konkreten Fall (R² = 2-Ethylhexyl) ist n ≈ 160 und m = 1. Die Reste R¹³ (Kettenendglieder am Silikonbackbone(Silocongrundgerüst)) sind gemäß NMR zu ca. 20% Hydroxy, ansonsten Methoxy und Ethoxy.

Ferner wurden Varianten dieser Verbindung hergestellt, und zwar mit R² = Ethyl, Stearyl und Isodecyl. Diese Organopolysiloxane wurden über modifizierte Silane *in* situ hergestellt.

### Beispiel II-2 (Anwendung)

Im Textilbereich (Beschichtung von Baumwolle) wurden die drei gemäß Beispiel II-1 hergestellten Verbindungen mit R² = Ethyl,

Stearyl und Isodecyl geprüft, und zwar im Vergleich mit einem handelsüblichen Aminosiloxan (Silastol NSI) mit der folgenden Struktur:

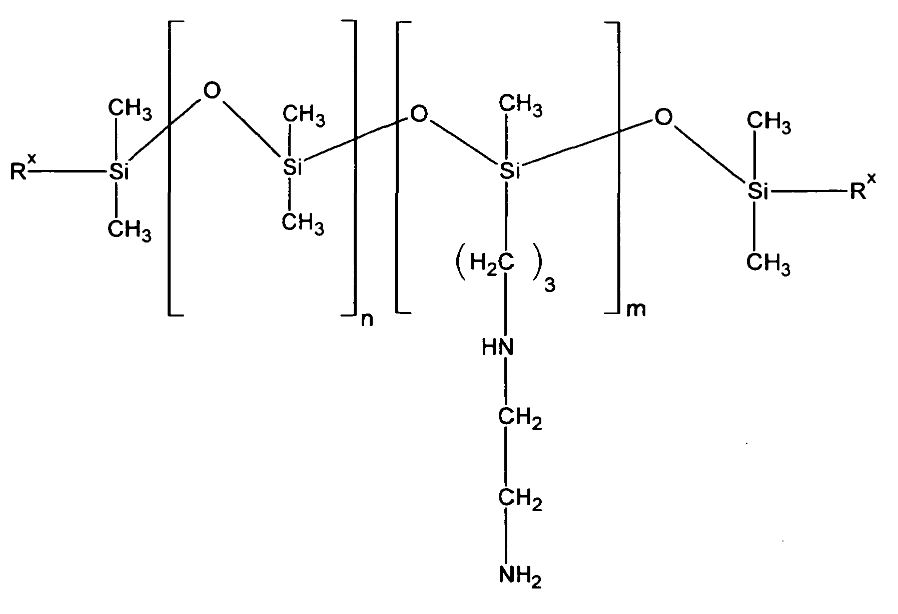

(Poly[3-((2-aminoethyl)amino)propyl]methyl(dimethyl)siloxan, R^{x} = Hydroxy, Alkoxy oder Alkyl)

Getestet wurden der Weichgriff (subjektiver Personentest) und die Vergilbung (Standardtest). Am Besten schnitt das erfindungsgemäße Organopolysiloxan mit R² = Isodecyl ab (m = 3-6).

Bei den erfindungsgemäßen Organopolysiloxanen trat keine Vergilbung auf, während das gezeigte Aminopolysiloxan zur Vergilbung führte.

### Beispiel II-3 (Anwendung)

Im Bereich Beschichtung hydrophober Fasern und Vliese wurden die beiden gemäß Beispiel II-1 hergestellten Verbindungen mit R² = Ethylhexyl und Stearyl geprüft, und zwar im Vergleich mit einem handelsüblichen epoxyfunktionellen Siloxan (VP 5145) mit der folgenden Struktur:

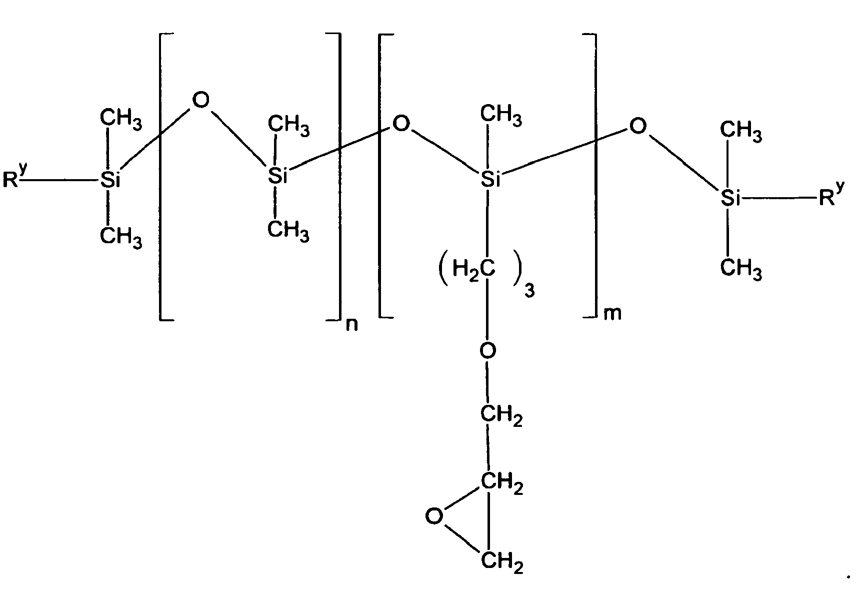

(Poly[3-Glycidoxypropyl]methyl(dimethyl)siloxan, R^{y} = Hydroxy, Alkoxy oder Alkyl)

Es wurden der Weichgriff (subjektiver Personentest) und die Hydrophobie über eine erreichbare Wassersäule getestet. Der beste Weichgriff wurde mit dem erfindungsgemäßen Organopolysiloxan mit R² = 2-Ethylhexyl erreicht. Die Verschlechterung der Hydrophobie bei den erfindungsgemäßen Organopolysiloxanen gegenüber dem gezeigten Epoxysiloxan war gering.

## Patentansprüche

1. Thioether-funktionalisiertes Organopolysiloxan, welches den Rest R^{s} aufweist, der über eine Silizium-Kohlenstoff-Bindung gebunden ist, wobei
R^{s} -R¹-S-E-A-R² oder
-R¹-A-E-S-R² bedeutet, und
R¹ eine zweiwertige, lineare, verzweigte oder cyclische Kohlenwasserstoffgruppe bedeutet,
S ein Schwefelatom bedeutet,
E eine zweiwertige, lineare, verzweigte oder cyclische Kohlenwasserstoffgruppe bedeutet,
A eine Gruppe mit Elektronenakzeptoreigenschaften bedeutet,
R² Wasserstoff oder eine einwertige, lineare, verzweigte oder cyclische Kohlenwasserstoffgruppe bedeutet.

2. Organopolysiloxan nach Anspruch 1, **dadurch gekennzeichnet, dass** E den zweiwertigen Rest -CR³R⁴- oder den zweiwertigen Rest -CR³R⁴-CR⁵R⁶- bedeutet, wobei R³, R⁴, R⁵, R⁶ Wasserstoff oder eine einwertige, lineare, verzweigte oder cyclische Kohlenwasserstoffgruppe bedeuten und gleich oder verschieden sein können.

3. Organopolysiloxan nach Anspruch 1 oder 2, **dadurch gekennzeichnet, dass** A die Carbonylgruppe (CO), die Carboxylgruppe (COO), die Sulfonsäuregruppe (SO₃) oder ein Sauerstoffatom (O) bedeutet.

4. Organopolysiloxan nach einem der vorhergehenden Ansprüche, **dadurch gekennzeichnet, dass** R^{s} die Bedeutung R^{s1}, R^{s2}, R^{s3} oder R^{s4} hat
- R¹-S-CR⁵R⁶-CR³R⁴-COOR² (R^{s1}),
- R¹-S-CR³R⁴-COOR² (R^{s2}),
- R¹-O-CO-CR³R⁴-CR⁵R⁶-SR² (R^{s3}) oder
- R¹-O-CO-CR³R⁴-SR² (R^{s4}) hat,
und vorzugsweise die Bedeutung R^{s1} oder R^{s2} hat.

5. Organopolysiloxan nach einem der vorhergehenden Ansprüche, **dadurch gekennzeichnet, dass** R¹ eine 1,ω-C₁- bis C₁₀-Alkylengruppe ist, vorzugsweise eine 1,ω-C₁- bis C₄-Alkylengruppe, insbesondere eine 1,3-Propylengruppe.

6. Organopolysiloxan nach einem der vorhergehenden Ansprüche, **dadurch gekennzeichnet, dass** R² Wasserstoff oder eine lineare oder verzweigte C₁- bis C₂₀-Alkylgruppe, eine C₁- bis C₂₀-Cycloalkylgruppe oder C₁- bis C₂₀-Arylgruppe bedeutet, vorzugsweise eine verzweigte C₁- bis C₁₂-Alkylgruppe, insbesondere eine Methylgruppe, eine Ethylgruppe, eine 2-Ethylhexylgruppe, eine Stearylgruppe oder eine Isodecylgruppe.

7. Organopolysiloxan nach einem der vorhergehenden Ansprüche, **dadurch gekennzeichnet, dass** R³, R⁴, R⁵ und R⁶ unabhängig voneinander Wasserstoff oder eine lineare C₁- bis C₁₀-Alkylgruppe bedeuten, vorzugsweise Wasserstoff oder Methyl.

8. Organopolysiloxan nach einem der Ansprüche 4 bis 7, **dadurch gekennzeichnet, dass** R^{s} die Bedeutung R^{s1} hat und
R⁴, R⁵ und R⁶ jeweils Wasserstoff bedeuten, und
R³ Wasserstoff oder Methyl bedeutet, vorzugsweise Methyl.

9. Organopolysiloxan nach einem der Ansprüche 4 bis 7, **dadurch gekennzeichnet, dass** R^{s} die Bedeutung R^{s2} hat und
R⁴ Methyl bedeutet, und
R³ Wasserstoff oder Methyl bedeutet, vorzugsweise Methyl.

10. Organopolysiloxan nach einem der Ansprüche 4 bis 7, **dadurch gekennzeichnet, dass** R^{s} die Bedeutung R^{s3} hat und
R⁴, R⁵ und R⁶ jeweils Wasserstoff bedeuten, und
R³ Wasserstoff oder Methyl bedeutet, vorzugsweise Methyl.

11. Organopolysiloxan nach einem der Ansprüche 4 bis 7, **dadurch gekennzeichnet**, das R^{s} die Bedeutung R^{s4} hat und
R⁴ Methyl bedeutet, und
R³ Wasserstoff oder Methyl bedeutet, vorzugsweise Methyl.

12. Thioether-funktionalisiertes Organopolysiloxan nach einem der vorhergehenden Ansprüche, **dadurch gekennzeichnet, dass** es die Struktureinheit I aufweist
[R⁷ₐ(R⁸O)_{b}R^{s}_{c}SiO_{[4-a+b+c})_{/2]}] (I).
wobei
R⁷, R⁸ lineare, verzweigte oder cyclische organische Reste bedeuten und gleich oder verschieden sein können,
a die Werte 0, 1 oder 2 annehmen kann und vorzugsweise 1 ist,
b die Werte 0, 1 oder 2 annehmen kann und vorzugsweise 0 ist,
c die Werte 1, 2 oder 3 annehmen kann und vorzugsweise 1 ist,
die Summe (a+b+c) die Werte 2 oder 3 annehmen kann und vorzugsweise 2 ist,
für a = 2 die Reste R⁷ gleich oder verschieden sein können,
für b = 2 die Reste R⁸ gleich oder verschieden sein können und
für c = 2 die Reste R^{s} gleich oder verschieden sein können.

13. Organopolysiloxan nach Anspruch 12, **dadurch gekennzeichnet, dass** a = 1, b = 0 und c = 1.

14. Organopolysiloxan nach Anspruch 12 oder 13, **dadurch gekennzeichnet, dass** R⁷ aus Methyl, Ethyl, Propyl und Phenyl ausgewählt ist, und vorzugsweise Methyl ist.

15. Organopolysiloxan nach einem der vorhergehenden Ansprüche, **dadurch gekennzeichnet, dass** es ferner die Struktureinheit II aufweist
[R⁹R¹⁰SiO_{2/2}] (II),
wobei R⁹ und R¹⁰ lineare, verzweigte oder cyclische organische Reste bedeuten und gleich oder verschieden sein können, wobei vorzugsweise R⁹ und R¹⁰ gleich sind und aus Alkylresten, die von Sauerstoffatomen unterbrochen sind, oder Alkylresten, die von Schwefelatomen unterbrochen sind, oder Methyl, Ethyl, Propyl und Phenyl ausgewählt sind, und vorzugsweise Methyl sind.

16. Organopolysiloxan nach einem der vorhergehenden Ansprüche, **dadurch gekennzeichnet, dass** es ferner die Struktureinheit III aufweist
[R¹¹R¹²R¹³SiO_{1/2}) (III),
wobei
R¹¹, R¹² lineare, verzweigte oder cyclische organische Reste sind und gleich oder verschieden sein können und
R¹³ ein linearer, verzweigter oder cyclischer organischer Rest, der über ein Sauerstoffatom gebunden sein kann, oder Hydroxy ist.

17. Organopolysiloxan nach Anspruch 16, **dadurch gekennzeichnet, dass** R¹¹ und R¹² gleich sind und aus Methyl, Ethyl, Propyl und Phenyl ausgewählt sind, und vorzugsweise Methyl sind.

18. Organopolysiloxan nach Anspruch 11 oder 12, **dadurch gekennzeichnet, dass** R¹³ aus Alkylresten, die von Sauerstoffatomen unterbrochen sind, oder Alkylresten, die von Schwefelatomen unterbrochen sind, oder Methyl, Ethyl, Propyl, Phenyl, Methoxy, Ethoxy, Propoxy, Phenoxy und Hydroxy ausgewählt ist, wobei Methyl, Methoxy, Ethoxy und Hydroxy bevorzugt sind, insbesondere Methoxy, Ethoxy und Hydroxy.

19. Organopolysiloxan nach einem der vorhergehenden Ansprüche, **dadurch gekennzeichnet, dass** es die Struktur IV 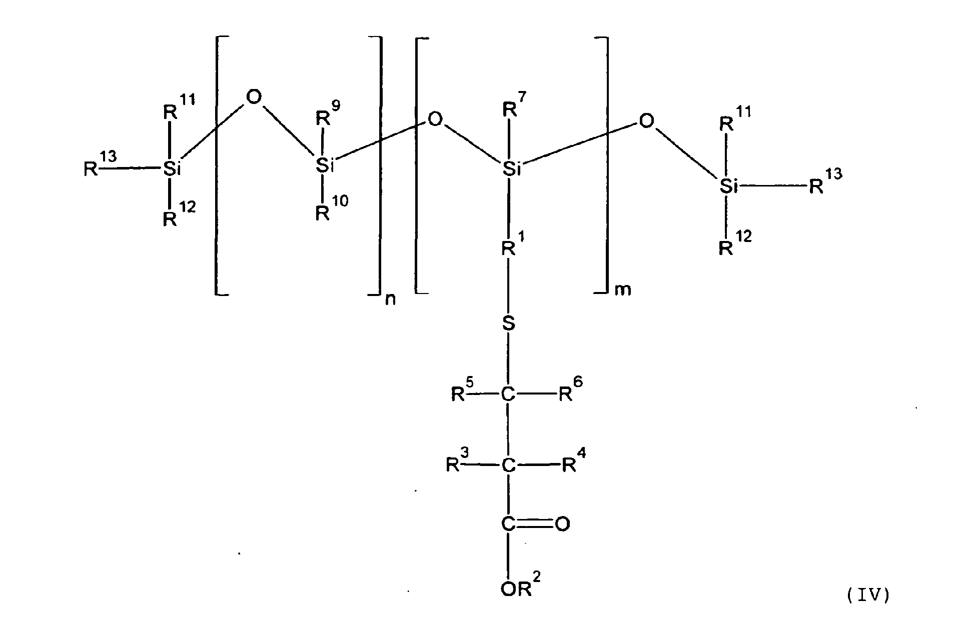 besitzt, wobei
n eine Zahl im Bereich von 10 bis 500 ist, vorzugsweise 50 bis 400, insbesondere 120 bis 300, beispielsweise 140 bis 200, und
m eine Zahl im Bereich von 1 bis 100 ist, vorzugsweise 1 bis 10, insbesondere 1 bis 8, wie 1 oder 3 bis 6, und
R¹ bis R¹³ die in den Ansprüchen 1 bis 18 angegebene Bedeutung haben.

20. Organopolysiloxan nach einem der Ansprüche 1 bis 18, **dadurch gekennzeichnet, dass** es die Struktur V 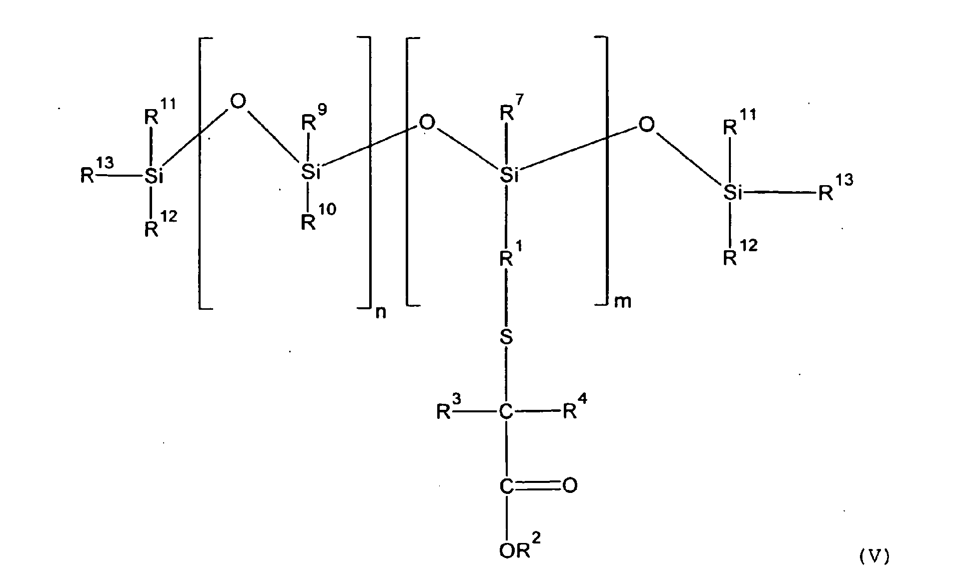 besitzt, wobei
n eine Zahl im Bereich von 10 bis 500 ist, vorzugsweise 50 bis 400, insbesondere 120 bis 300, beispielsweise 140 bis 200,
m eine Zahl im Bereich von 1 bis 100 ist, vorzugsweise 1 bis 10, insbesondere 1 bis 8, wie 1 oder 3 bis 6, und
R¹ bis R¹³ die in den Ansprüchen 1 bis 18 angegebene Bedeutung haben.

21. Organopolysiloxan nach einem der Ansprüche 1 bis 18, **dadurch gekennzeichnet, dass** es die Struktur VI 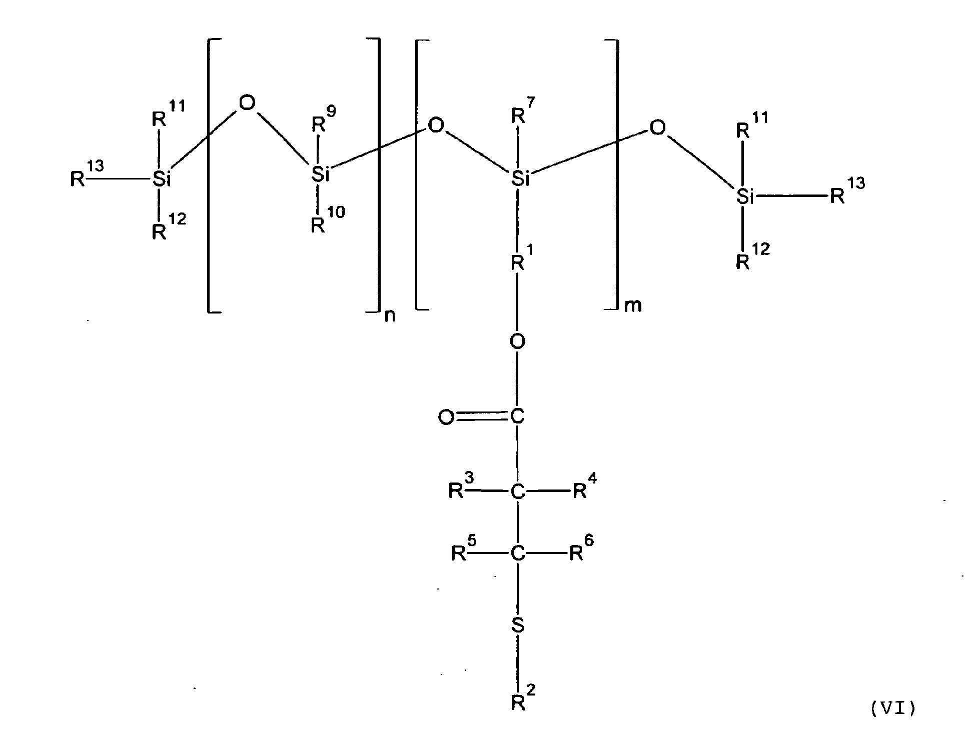 besitzt, wobei
n eine Zahl im Bereich von 10 bis 500 ist, vorzugsweise 50 bis 400, insbesondere 120 bis 300, beispielsweise 140 bis 200,
m eine Zahl im Bereich von 1 bis 100 ist, vorzugsweise 1 bis 10, insbesondere 1 bis 8, wie 1 oder 3 bis 6, und R¹ bis R¹³ die in den Ansprüchen 1 bis 18 angegebene Bedeutung haben.

22. Organopolysiloxan nach einem der Ansprüche 1 bis 18, **dadurch gekennzeichnet, dass** es die Struktur VII 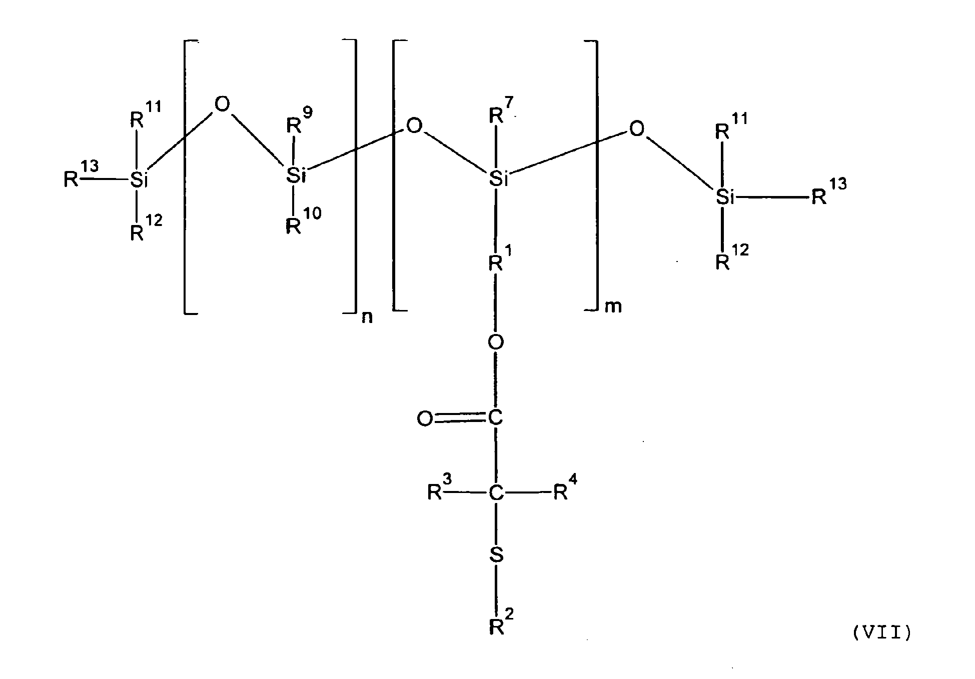 besitzt, wobei
n eine Zahl im Bereich von 10 bis 500 ist, vorzugsweise 50 bis 400, insbesondere 120 bis 300, beispielsweise 140 bis 200,
m eine Zahl im Bereich von 1 bis 100 ist, vorzugsweise 1 bis 10, insbesondere 1 bis 8, wie 1 oder 3 bis 6, und
R¹ bis R¹³ die in den Ansprüchen 1 bis 18 angegebene Bedeutung haben.

23. Verfahren zur Herstellung des Organopolysiloxans gemäß einem der vorhergehenden Ansprüche, bei dem die Komponenten (a) Schwefel-funktionalisierte Verbindung, (b) Reagenz mit aktivierter Doppelbindung und (c) Silikonmonomer miteinander umgesetzt werden.

24. Verfahren nach Anspruch 23, bei dem
- ein Mercapto-funktionalisiertes Silan als Schwefel-funktionalisierte Verbindung a) eingesetzt wird,
- ein Methacrylsäureester als Reagenz mit aktivierter Doppelbindung b) eingesetzt wird und
- ein cyclisches Siloxan als Silikonmonomer c) eingesetzt wird,
wobei zunächst die Komponenten a) und b) miteinander umgesetzt werden und das dabei entstehende Produkt mit der Komponente c) umgesetzt wird, um das Organopolysiloxan zu erhalten.

25. Organopolysiloxane, herstellbar nach dem Verfahren gemäß einem der Ansprüche 23 und 24.

26. Zubereitungen enthaltend mindestens ein Organopolysiloxan gemäß einem der Ansprüche 1 bis 22 und 25 oder hergestellt gemäß einem der Ansprüche 23 und 24.

27. Verwendung von Zubereitungen gemäß Anspruch 26 zur Weichgriffausrüstung und/oder Hydrophobausrüstung von Textilien, als Prozesshilfsmittel zur Herstellung oder zur Beschichtung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege.

## Claims

1. Thioether-functionalised organopolysiloxane, possessing the R^{s} group
that is bonded through a silicon-carbon bond, wherein
R^{s} means -R¹-S-E-A-R² or
-R¹-A-E-S-R², and
R¹ means a divalent, linear, branched or cyclic hydrocarbon group,
S means a sulfur atom,
E means a divalent, linear, branched or cyclic hydrocarbon group,
A means an electron withdrawing group,
R² means hydrogen or a monovalent, linear, branched or cyclic hydrocarbon group.

2. Organopolysiloxane according to claim 1, **characterised in that** E means the divalent group -CR³R⁴- or the divalent group -CR³R⁴-CR⁵R⁶-, wherein R³, R⁴, R⁵, R⁶ mean hydrogen or a monovalent, linear, branched or cyclic hydrocarbon group and can be the same or different.

3. Organopolysiloxane according to claim 1 or 2, **characterised in that** A means the carbonyl group (CO), the carboxyl group (COO), the sulfonic acid group (SO₃) or an oxygen atom (O).

4. Organopolysiloxane according to one of the previous claims, **characterised in that** R^{s} has the meaning R^{s1}, R^{s2}, R^{s3} or R^{s4}
- R¹-S-CR⁵R⁶-CR³R⁴-COOR² (R^{s1}),
- R¹-S-CR³R⁴-COOR² (R^{s2}),
- R¹-O-CO-CR³R⁴-CR⁵R⁶-SR² (R^{s3}), or
- R¹-O-CO-CR³R⁴-SR² (R^{s4}),
and preferably has the meaning R^{s1} or R^{s2}.

5. Organopolysiloxane according to one of the previous claims, **characterised in that** R¹ is a 1,ω-C₁ to C₁₀ alkylene group, preferably a 1,ω-C₁ to C₄ alkylene group, in particular a 1,3-propylene group.

6. Organopolysiloxane according to one of the previous claims, **characterised in that** R² means hydrogen or a linear or branched C₁ to C₂₀ alkyl group, a C₁ to C₂₀ cycloalkyl group or C₁ to C₂₀ aryl group, preferably a branched C₁ to C₁₂ alkyl group, in particular a methyl group, an ethyl group, a 2-ethylhexyl group, a stearyl group or an isodecyl group.

7. Organopolysiloxane according to one of the previous claims, **characterised in that** R² means hydrogen or a linear or branched C₁ to C₂₀ alkyl group, a C₁ to C₂₀ cycloalkyl group or C₁ to C₂₀ aryl group, preferably a branched C₁ to C₁₂ alkyl group, in particular a methyl group, an ethyl group, a 2-ethylhexyl group, a stearyl group or an isodecyl group.

8. Organopolysiloxane according to one of the claims 4 to 7, **characterised in that** R^{s} has the meaning R^{s1} and
R⁴, R⁵ and R⁶ each mean hydrogen, and
R³ means hydrogen or methyl, preferably methyl.

9. Organopolysiloxane according to one of the claims 4 to 7, **characterised in that** R^{s} has the meaning R^{s2} and
R⁴ means methyl, and
R³ means hydrogen or methyl, preferably methyl.

10. Organopolysiloxane according to one of the claims 4 to 7, **characterised in that** R^{s} has the meaning R^{s3} and
R⁴, R⁵ and R⁶ each mean hydrogen, and
R³ means hydrogen or methyl, preferably methyl.

11. Organopolysiloxane according to one of the claims 4 to 7, **characterised in that** R^{s} has the meaning R^{s4} and
R⁴ means methyl, and
R³ means hydrogen or methyl, preferably methyl.

12. Thioether-functionalised organopolysiloxane according to one of the previous claims, **characterised in that** it possesses the structural unit I
[R⁷ₐ(R⁸O)_{b}R^{s}_{c}SiO_{[4-}(_{a+b+c)/2]}] (I),
wherein
R⁷, R⁸ mean linear, branched or cyclic organic groups and can be the same or different,
a can take the values 0, 1 or 2 and is preferably 1,
b can take the values 0, 1 or 2 and is preferably 0,
c can take the values 1, 2 or 3 and is preferably 1,
the sum (a+b+c) can take the values 2 or 3 and is preferably 2,
when a = 2 the R⁷ groups can be the same or different,
when b = 2 the R⁸ groups can be the same or different and
when c = 2 the R^{s} groups can be the same or different.

13. Organopolysiloxane according to claim 12, **characterised in that** a = 1, b = 0 and c = 1.

14. Organopolysiloxane according to claim 12 or 13, **characterised in that** R⁷ is selected from methyl, ethyl, propyl and phenyl, and is preferably methyl.

15. Organopolysiloxane according to one of the previous claims, **characterised in that** it further possesses the structural unit II
[R⁹R¹⁰SiO_{2/2}] (II),
wherein R⁹ and R¹⁰ mean linear, branched or cyclic organic groups and can be the same or different, wherein R⁹ and R¹⁰ are preferably the same and are selected from alkyl groups that are interrupted by oxygen atoms, or alkyl groups that are interrupted by sulfur atoms, or methyl, ethyl, propyl and phenyl, and are preferably methyl.

16. Organopolysiloxane according to one of the previous claims, **characterised in that** it further possesses the structural unit III
[R¹¹R¹²R¹³SiO_{1/2}] (III),
wherein
R¹¹, R¹² mean linear, branched or cyclic organic groups and can be the same or different and
R¹³ is a linear, branched or cyclic organic group that can be bonded through an oxygen atom, or is hydroxy.

17. Organopolysiloxane according to claim 16, **characterised in that** R¹¹ and R¹² are the same and are selected from methyl, ethyl, propyl and phenyl, and are preferably methyl.

18. Organopolysiloxane according to claim 11 or 12, **characterised in that** R¹³ is selected from alkyl groups that are interrupted by oxygen atoms, or alkyl groups that are interrupted by sulfur atoms, or methyl, ethyl, propyl, phenyl, methoxy, ethoxy, propoxy, phenoxy and hydroxy, wherein methyl, methoxy, ethoxy and hydroxy are preferred, in particular methoxy, ethoxy and hydroxy.

19. Organopolysiloxane according to one of the previous claims, **characterised in that** it possesses the structure IV 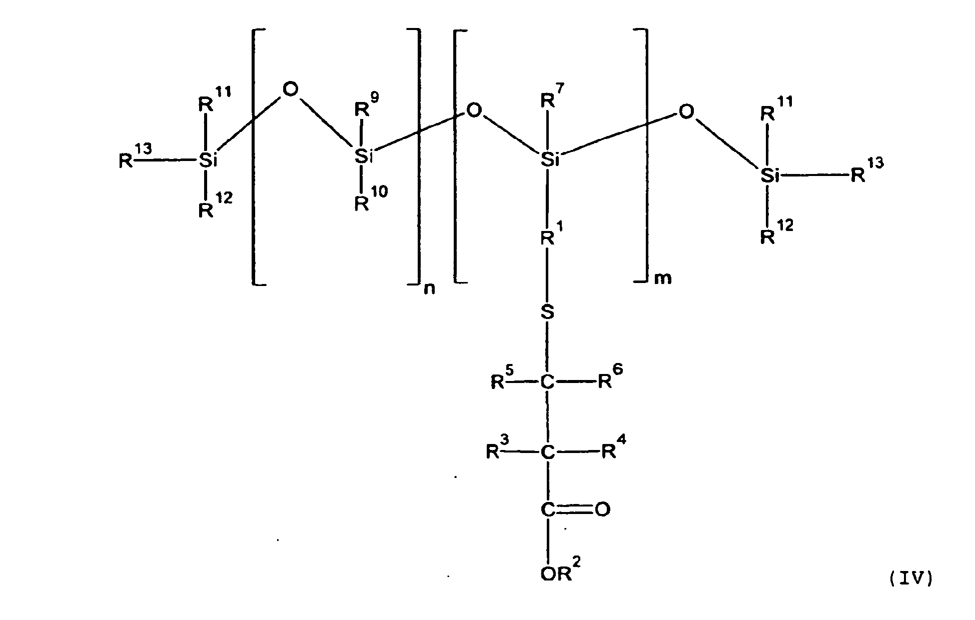 wherein
n is a number in the range 10 to 500, preferably 50 to 400, in particular 120 to 300, for example 140 to 200, and
m is a number in the range 1 to 100, preferably 1 to 10, in particular 1 to 8, such as 1 or 3, and
R¹ to R¹³ have the meaning given in the claims 1 to 18.

20. Organopolysiloxane according to one of the claims 1 to 18, **characterised in that** it possesses the structure V 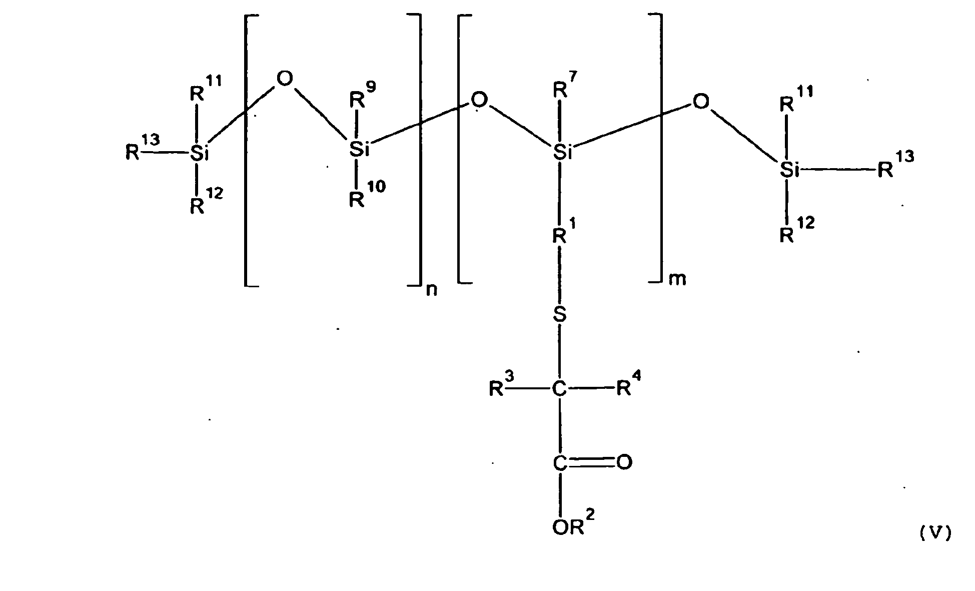 wherein
n is a number in the range 10 to 500, preferably 50 to 400, in particular 120 to 300, for example 140 to 200,
m is a number in the range 1 to 100, preferably 1 to 10, in particular 1 to 8, such as 1 or 3 to 6, and
R¹ to R¹³ have the meaning given in the claims 1 to 18.

21. Organopolysiloxane according to one of the claims 1 to 18, **characterised in that** it possesses the structure VI 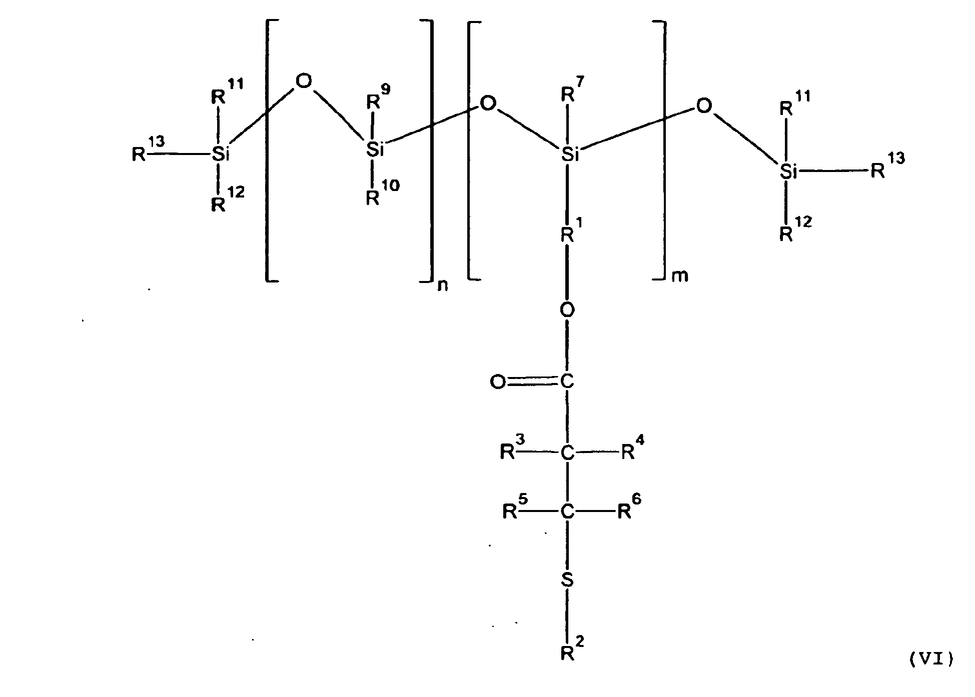 wherein
n is a number in the range 10 to 500, preferably 50 to 400, in particular 120 to 300, for example 140 to 200,
m is a number in the range 1 to 100, preferably 1 to 10, in particular 1 to 8, such as 1 or 3 to 6, and
R¹ to R¹³ have the meaning given in the claims 1 to 18.

22. Organopolysiloxane according to one of the claims 1 to 18, **characterised in that** it possesses the structure VII 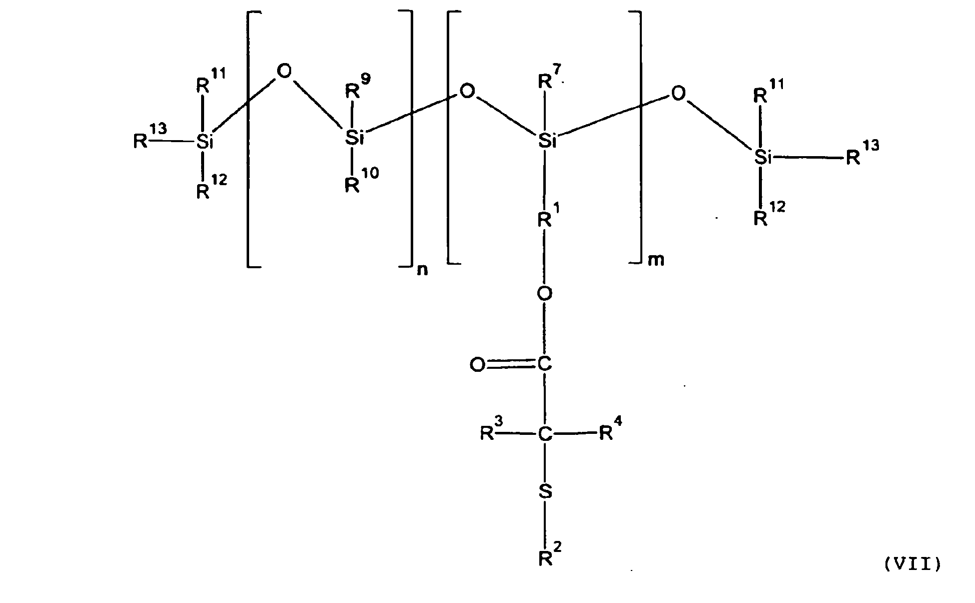 wherein
n is a number in the range 10 to 500, preferably 50 to 400, in particular 120 to 300, for example 140 to 200,
m is a number in the range 1 to 100, preferably 1 to 10, in particular 1 to 8, such as 1 or 3 to 6, and
R¹ to R¹³ have the meaning given in the claims 1 to 18.

23. Process for manufacturing the organopolysiloxane according to one of the previous claims, in which the components (a) sulfur-functionalised compound, (b) reagent with an activated double bond and (c) silicone monomer are reacted together.

24. Process according to claim 23, in which
- a mercapto-functionalised silane is incorporated as the sulfur-functionalised compound (a),
- a methacrylic acid ester is incorporated as the reagent with an activated double bond (b) and
- a cyclic siloxane is incorporated as the silicone monomer (c),
wherein the components (a) and (b) are initially reacted together and the thus-resulting product is reacted with the component (c), in order to obtain the organopolysiloxane.

25. Organopolysiloxane that can be manufactured by the process according to one of the claims 23 and 24.

26. Preparation comprising at least one organopolysiloxane according to one of the claims 1 to 22 and 25 or manufactured according to one of the claims 23 and 24.

27. Use of preparations according to claim 26 for providing a soft finish and/or hydrophobic finish to fabrics, as a process aid for manufacturing or for coating natural or synthetic fibres, in laundry detergents and cleaning agents, in polishes and care products for treating hard surfaces, for coating and drying automobile paint surfaces, as corrosion inhibitors and for skin and hair care.

## Revendications

1. Organopolysiloxane fonctionnalisé par un thioéther, lequel présente le radical R^{s}, qui est lié par une liaison silicium carbone, où
R^{s} représente -R¹-S-E-A-R² ou -R¹-A-E-S-R², et
R¹ représente un groupe hydrocarbure bivalent, linéaire, ramifié ou cyclique,
S représente un atome de soufre,
E représente un groupe hydrocarbure bivalent, linéaire, ramifié ou cyclique,
A représente un groupe avec des propriétés d'accepteur d'électrons,
R² représente un hydrogène ou un groupe hydrocarbure monovalent, linéaire, ramifié ou cyclique.

2. Organopolysiloxane selon la revendication 1, **caractérisé en ce que** E représente le radical bivalent -CR³R⁴- ou le radical bivalent -CR³R⁴-CR⁵R⁶-, dans lequel R³, R⁴, R⁵, R⁶ peuvent représenter un hydrogène ou un groupe hydrocarbure monovalent, linéaire, ramifié ou cyclique et être identiques ou différents.

3. Organopolysiloxane selon la revendication 1 ou 2, **caractérisé en ce que** A représente le groupe carbonyle (CO), le groupe carboxyle (COO), le groupe acide sulfonique (SO₃) ou un atome d'oxygène (O).

4. Organopolysiloxane selon l'une quelconque des revendications précédentes, **caractérisé en ce que** R^{s} représente R^{s1}, R^{s2}_{,} R^{s3} ou R^{s4}
- R¹-S-CR⁵R⁶-CR³R⁴-COOR² (R^{s1}),
- R¹-S-CR³R⁴-COOR² (R^{s2}),
- R¹-O-CO-CR³R⁴-CR⁵R⁶-SR² (R^{s3}) ou
- R¹-O-CO-CR³R⁴-SR² (R^{s4}),
et de préférence R^{s1} ou R^{s2}_{.}

5. Organopolysiloxane selon l'une quelconque des revendications précédentes, **caractérisé en ce que** R¹ est un groupe alkyle en 1,ω-C₁- à C₁₀-, de préférence un groupe alkyle en 1,ω-C₁ à C₄, en particulier un groupe 1,3-propylène.

6. Organopolysiloxane selon l'une quelconque des revendications précédentes, **caractérisé en ce que** R² représente un hydrogène ou un groupe alkyle en C₁- à C₂₀ linéaire ou ramifié, un groupe cycloalkyle en C₁- à C₂₀- ou un groupe aryle en C₁- à C₂₀-, de préférence un groupe alkyle en C₁- à C₁₂- ramifié, en particulier un groupe méthyle, un groupe éthyle, un groupe 2-éthylhexyle, un groupe stéaryle ou un groupe isodécyle.

7. Organopolysiloxane selon l'une quelconque des revendications précédentes, **caractérisé en ce que** R³, R⁴, R⁵ et R⁶ représentent indépendamment les uns des autres un hydrogène ou un groupe alkyle C₁- à C₁₀ linéaire, de préférence un hydrogène ou un méthyle.

8. Organopolysiloxane selon l'une quelconque des revendications 4 à 7, **caractérisé en ce que** R^{s} représente R^{s1} et
R⁴, R⁵ et R⁶ représentent chacun un hydrogène, et
R³ représente un hydrogène ou un méthyle, de préférence un méthyle.

9. Organopolysiloxane selon l'une quelconque des revendications 4 à 7, **caractérisé en ce que** R^{s} représente R^{s2} et
R⁴ représente un méthyle, et
R³ représente un hydrogène ou un méthyle, de préférence un méthyle.

10. Organopolysiloxane selon l'une quelconque des revendications 4 à 7, **caractérisé en ce que** R^{s} représente R^{s3} et
R⁴, R⁵ et R⁶ représentent chacun un hydrogène, et
R³ représente un hydrogène ou un méthyle, de préférence un méthyle.

11. Organopolysiloxane selon l'une quelconque des revendications 4 à 7, **caractérisé en ce que** R^{s} représente R^{s4} et
R⁴ représente un méthyle, et
R³ représente un hydrogène ou un méthyle, de préférence un méthyle.

12. Organopolysiloxane fonctionnalisé par un thioéther selon l'une quelconque des revendications précédentes, **caractérisé en ce qu'**il présente l'unité structurale I
[R⁷ₐ(R⁸O)_{b}R^{s}_{c}SiO_{[4}-_{(a+b+c)/2]}] (I),
où
R⁷, R⁸ représentent des radicaux organiques linéaires, ramifiés ou cycliques et peuvent être identiques ou différents,
a peut prendre les valeurs 0, 1 ou 2 et est égal à 1 de préférence,
b peut prendre les valeurs 0, 1 ou 2 et est égal à 0 de préférence,
c peut prendre les valeurs 1, 2 ou 3 et est égal à 1 de préférence,
la somme (a+b+c) peut prendre les valeurs 2 ou 3 et est égale à 2 de préférence, quand a = 2 les radicaux R⁷ peuvent être identiques ou différents,
quand b = 2 les radicaux R⁸ peuvent être identiques ou différents, et
quand c = 2 les radicaux R^{s} peuvent être identiques ou différents.

13. Organopolysiloxane selon la revendication 12, **caractérisé en ce que** a = 1, b = 0 et c = 1.

14. Organopolysiloxane selon la revendication 12 ou 13, **caractérisé en ce que** R⁷ est choisi dans le groupe constitué de méthyle, éthyle, propyle et phényle, et est de préférence un méthyle.

15. Organopolysiloxane selon l'une quelconque des revendications précédentes, **caractérisé en ce qu'**il présente en outre l'unité structurale II
[R⁹R¹⁰SiO_{2/2]} (II),
où R⁹ et R¹⁰ représentent des radicaux organiques linéaires, ramifiés ou cycliques et peuvent être identiques ou différents, où R⁹ et R¹⁰ sont de préférence identiques et sont choisis dans le groupe constitué des radicaux alkyles, qui sont interrompus par des atomes d'oxygène, des radicaux alkyles, qui sont interrompus par des atomes de soufre, et d'un méthyle, d'un éthyle, d'un propyle et d'un phényle, et sont de préférence un méthyle.

16. Organopolysiloxane selon l'une quelconque des revendications précédentes, **caractérisé en ce qu'**il présente en outre l'unité structurale III
[R¹¹R¹²R¹³SiO_{1/2}] (III),
où
R¹¹, R¹² sont des radicaux organiques linéaires, ramifiés ou cycliques et peuvent être identiques ou différents et
R¹³ peut être un radical organique linéaire, ramifié ou cyclique, qui peut être lié via un atome d'oxygène, ou peut être un groupe hydroxy.

17. Organopolysiloxane selon la revendication 16, **caractérisé en ce que** R¹¹ et R¹² sont identiques et sont choisis dans le groupe constitué de méthyle, éthyle, propyle et phényle, et sont de préférence un méthyle.

18. Organopolysiloxane selon la revendication 11 ou 12, **caractérisé en ce que** R¹³ est choisi dans le groupe constitué des radicaux alkyles, qui sont interrompus par des atomes d'oxygène, des radicaux alkyles, qui sont interrompus par des atomes de soufre, d'un méthyle, d'un éthyle, d'un propyle, d'un phényle, d'un méthoxy, d'un éthoxy, d'un propoxy, d'un phénoxy et d'un hydroxy, où un méthyle, un méthoxy, un éthoxy et un hydroxy sont préférés, et en particulier un méthoxy, un éthoxy et un hydroxy.

19. Organopolysiloxane selon l'une quelconque des revendications précédentes, **caractérisé en ce qu'**il possède la structure IV 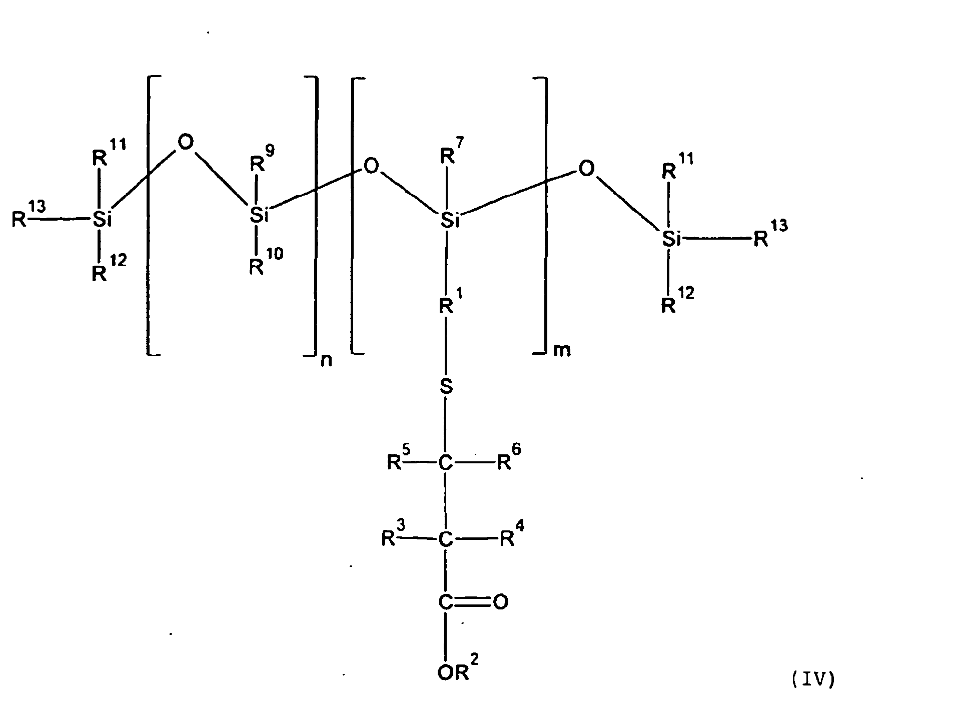 où
n a une valeur dans le domaine de 10 à 500, de préférence 50 à 400, en particulier 120 à 300, par exemple 140 à 200, et
m a une valeur dans le domaine de 1 à 100, de préférence de 1 à 10, en particulier 1 à 8, comme 1 ou 3 à 6, et
R¹ à R¹³ représentent les mêmes valeurs que celles données dans les revendications 1 à 18.

20. Organopolysiloxane selon l'une quelconque des revendications 1 à 18, **caractérisé en ce qu'**il possède la structure V 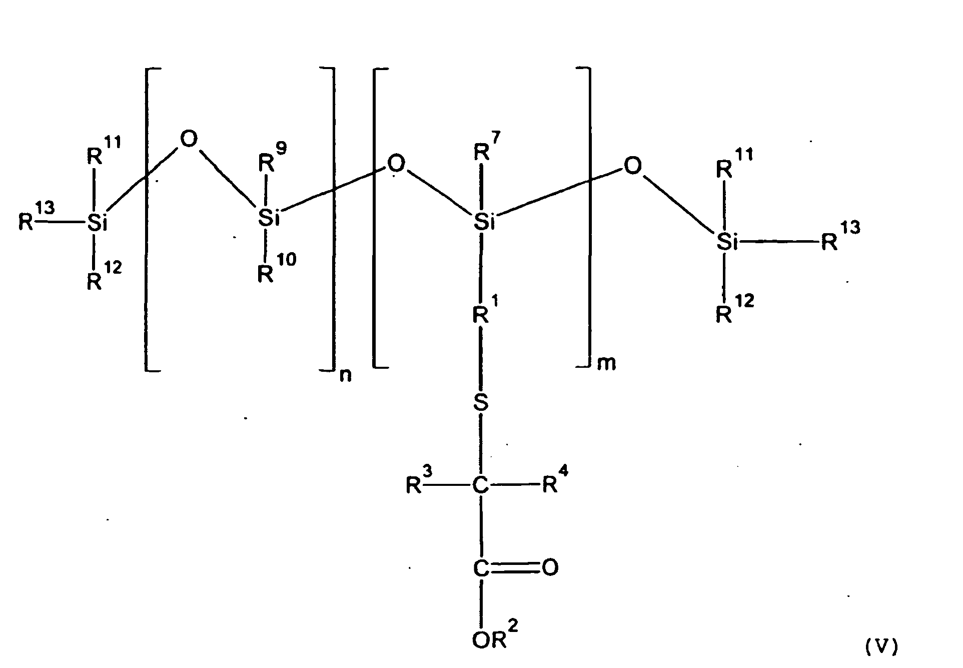 où
n a une valeur dans le domaine de 10 à 500, de préférence 50 à 400, en particulier 120 à 300, par exemple 140 à 200,
m a une valeur dans le domaine de 1 à 100, de préférence 1 à 10, en particulier 1 à 8, comme 1 ou 3 à 6, et
R¹ à R¹³ représentent les mêmes valeurs que celles données dans les revendications 1 à 18.

21. Organopolysiloxane selon l'une quelconque des revendications 1 à 18, **caractérisé en ce qu'**il possède la structure VI 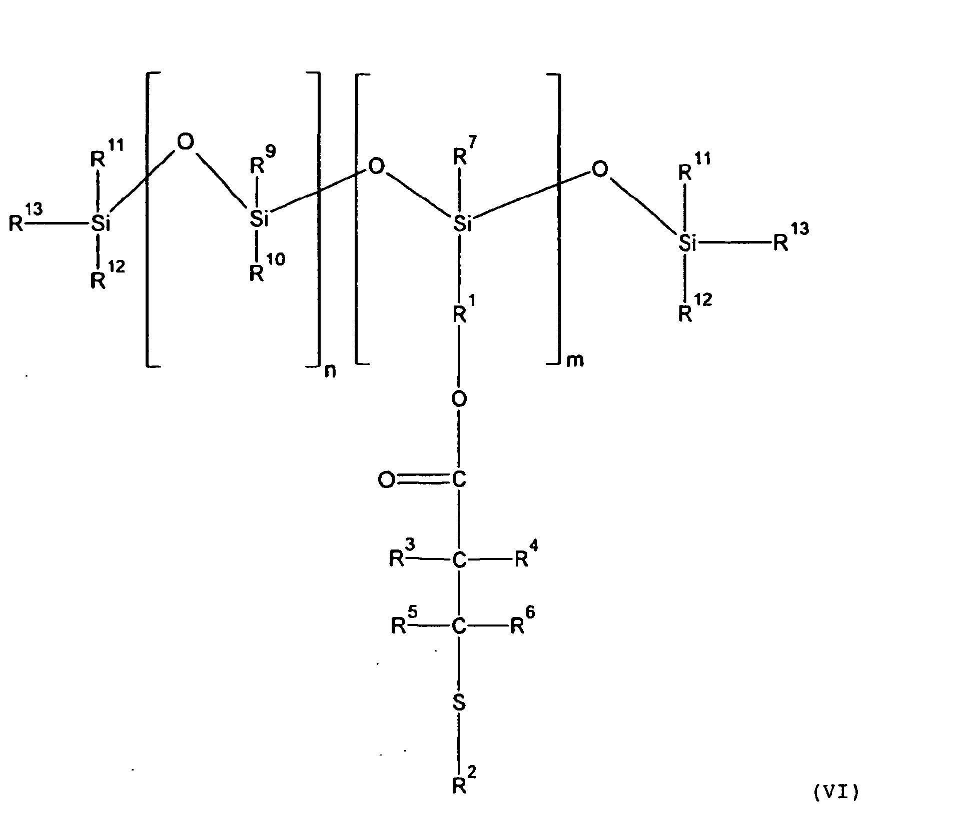 où
n a une valeur dans le domaine de 10 à 500, de préférence 50 à 400, en particulier 120 à 300, par exemple 140 à 200,
m a une valeur dans le domaine de 1 à 100, de préférence 1 à 10, en particulier 1 à 8, comme 1 ou 3 à 6, et
R¹ à R¹³ représentent les mêmes valeurs que celles données dans les revendications 1 à 18.

22. Organopolysiloxane selon l'une quelconque des revendications 1 à 18, **caractérisé en ce qu'**il possède la structure VII 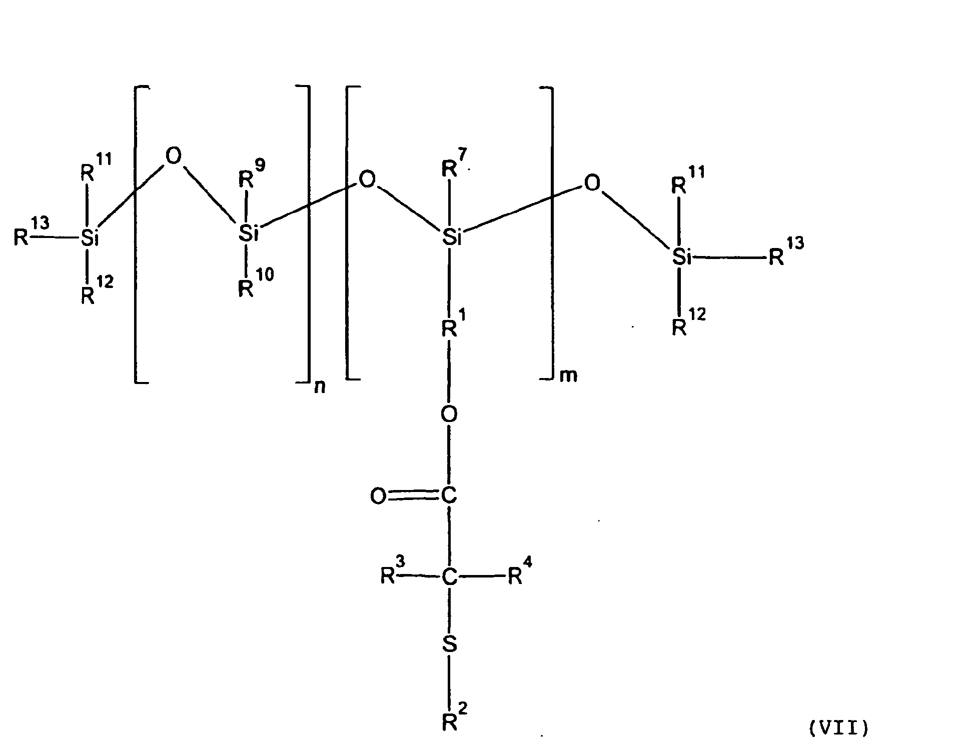 où
n a une valeur dans le domaine de 10 à 500, de préférence 50 à 400, en particulier 120 à 300, par exemple 140 à 200,
m a une valeur dans le domaine de 1 à 100, de préférence 1 à 10, en particulier 1 à 8, comme 1 ou 3 à 6, et
R¹ à R¹³ représentent les mêmes valeurs que celles données dans les revendications 1 à 18.

23. Procédé de préparation de l'organopolysiloxane selon l'une quelconque des revendications précédentes, dans lequel les composants (a) liaison fonctionnalisée par un soufre, (b) réactif à double liaison activée et (c) monomère de silicone sont placés pour réagir les uns avec les autres.

24. Procédé selon la revendication 23, dans lequel
un silane fonctionnalisé par un mercapto est prévu en tant que liaison fonctionnalisée par un soufre a),
un ester d'acide méthacrylique est prévu en tant que réactif à double liaison activée b), et
un siloxane cyclique est prévu en tant que monomère de silicone c),
dans lequel dans un premier temps les composants a) et b) sont placés pour réagir l'un avec l'autre, et le produit en résultant est placé pour réagir avec le composant c), afin d'obtenir l'organopolysiloxane.

25. Organopolysiloxane pouvant être fabriqué avec le procédé selon l'une quelconque des revendications 23 et 24.

26. Préparation contenant au moins un organopolysiloxane selon l'une quelconque des revendications 1 à 22 et 25 ou fabriquée selon l'une quelconque des revendications 23 et 24.

27. Utilisation de préparations selon la revendication 26 pour le traitement adoucissant du toucher et/ou le traitement hydrophobe de textiles, en tant qu'auxiliaire de mise en oeuvre pour la fabrication ou pour le revêtement de fibres naturelles ou synthétiques, dans des moyens de lavage et de nettoyage, dans des produits de polissage et d'entretien pour le traitement de surfaces dures, pour le revêtement et le séchage de surfaces laquées de véhicules automobiles, en tant qu'inhibiteurs de corrosion et pour le soin de la peau et des cheveux.
